# EUROPÄISCHE PATENTANMELDUNG

(11) **EP 4 451 571 A1**
(43) Veröffentlichungstag der Anmeldung: **23.10.2024**
(21) Anmeldenummer: 24164628.0
(22) Anmeldetag: 19.03.2024
(51) Int. Cl.: H04B 1/3888

(54) **TRANSCEIVERINTERFACE UND TRANSCEIVERSYSTEM**

(30) Priorität: 17.04.2023 DE 102023109616
(71) Anmelder: Flexoptix GmbH, 64297 Darmstadt (DE)
(72) Erfinder: ÖNAL, David Elias, 64297 Darmstadt (DE); WEIBLE, Thomas, 64297 Darmstadt (DE); ARNOLD, Markus, 64297 Darmstadt (DE)
(74) Vertreter: Zander, Ellen Vilja

(57) **Zusammenfassung**

Die Erfindung geht aus von einem Transceiverinterface (12), insbesondere einem mobilen Transceiverinterface, mit zumindest einem Transceiver-Steckplatz (20), welcher zur Anbindung eines steckbaren Transceivers (14) vorgesehen ist, und mit einer Gehäuseeinheit (18), welche einen Aufnahmeraum (26) zur Aufnahme zumindest eines Großteils des Transceivers (14) in einem eingesteckten Zustand des Transceivers (14) in dem Transceiver-Steckplatz (20) aufweist.

Um eine gattungsgemäße Vorrichtung mit verbesserten Eigenschaften hinsichtlich einer Effizienz, Flexibilität und Konstruktion bereitzustellen, wird vorgeschlagen, dass das Transceiverinterface (12) eine Verbindungseinheit (74) zur Bereitstellung einer Mobil- und/oder Internetverbindung aufweist.

## Beschreibung

### Stand der Technik

Die Erfindung betrifft ein Transceiverinterface nach dem Oberbegriff des Anspruchs 1 sowie ein Transceiversystem nach Anspruch 14.

Aus dem Stand der Technik, beispielsweise aus der Druckschrift DE 10 2016 115 546 A1, ist bereits ein Transceiverinterface zur Programmierung eines Transceivers bekannt.

Die Aufgabe der Erfindung besteht insbesondere darin, eine gattungsgemäße Vorrichtung mit verbesserten Eigenschaften hinsichtlich einer Effizienz, Flexibilität und Konstruktion bereitzustellen. Die Aufgabe wird erfindungsgemäß durch die Merkmale der Ansprüche 1 und 14 gelöst, während vorteilhafte Ausgestaltungen und Weiterbildungen der Erfindung den Unteransprüchen entnommen werden können.

### Vorteile der Erfindung

Die Erfindung geht aus von einem Transceiverinterface, insbesondere einem mobilen Transceiverinterface, mit zumindest einem Transceiver-Steckplatz, welcher zur Anbindung eines steckbaren Transceivers vorgesehen ist, und mit einer Gehäuseeinheit, welche einen Aufnahmeraum zur Aufnahme zumindest eines Großteils des Transceivers in einem eingesteckten Zustand des Transceivers in dem Transceiver-Steckplatz aufweist.

Es wird vorgeschlagen, dass das Transceiverinterface eine Verbindungseinheit zur Bereitstellung einer Mobil- und/oder Internetverbindung aufweist.

Durch eine derartige Ausgestaltung, kann eine Effizienz eines Transceiverinterfaces, vorteilhaft hinsichtlich einer Leistungseffizienz, und/oder einer Produkteffizienz, sowie eine Flexibilität in der Handhabung des Transceiverinterfaces gesteigert werden. Ferner kann unabhängig von einer externen, internet- und/oder mobilfunkfähigen Einheit eine Mobil- und/oder Internetverbindung bereitgestellt werden. Damit kann eine Handhabbarkeit, eine Benutzerfreundlichkeit und ein Benutzerkomfort gesteigert werden. Darüber hinaus kann eine Konstruktion des Transceiverinterfaces sowie ein Komfort verbessert werden.

Das Transceiverinterface ist insbesondere eine elektrische und/oder elektronische und vorzugsweise mobile Vorrichtung, welche zur Konfiguration und/oder Rekonfiguration zumindest des Transceivers vorgesehen ist. Unter der Konfiguration soll hierbei vorteilhaft eine Programmierung, insbesondere eine Umprogrammierung, des Transceivers, vorzugsweise einer Kodierung und/oder einer Kennung des Transceivers, verstanden werden. Alternativ und/oder zusätzlich könnte die Konfiguration des Transceivers, insbesondere mittels einer Konfigurationseinheit, eine Durchführung eines Tunings und/oder eines Testbetriebs, insbesondere eines Tunings und/oder eines Tests des Transceivers, und/oder eine Durchführung einer Messung, insbesondere zu einem Messen, einem Ausmessen und/oder einem Vermessen des Transceivers, und/oder ein Messen, ein Ausmessen und/oder ein Vermessen eines weiteren Objekts mittels des Transceivers umfassen. Das Tuning könnte beispielsweise ein Wellenlängen-Tuning, insbesondere ein Wavelength-Tuning, sein. Bei einem Verfahren zum Betrieb des Transceiverinterface kann der Transceiver konfiguriert, insbesondere programmiert und/oder getunt und/oder getestet, werden. Bevorzugt ist das Transceiverinterface als Mobilgerät, insbesondere als Handheld, ausgebildet. Alternativ könnte das Transceiverinterface auch als ein stationäres Gerät ausgebildet sein.

Vorzugsweise weist das Transceiverinterface eine Konfigurationseinheit zur Konfiguration, insbesondere die Kodierung und/oder die Kennung, zumindest des Transceivers auf. Die Konfigurationseinheit könnte die Konfiguration des Transceivers modifizieren, umcodieren, umprogrammieren und/oder anpassen, insbesondere an unterschiedliche Hardwaretypen und/oder Hardwarekonfigurationen, um vorteilhaft eine Verwendung des Transceivers mit unterschiedlicher Hardware, wie beispielsweise von unterschiedlichen Hardwareausrüstern, zu ermöglichen. Bevorzugt erfolgt eine Konfiguration des Transceivers zur Verwendung des Transceivers mit unterschiedlichen PSEs, insbesondere von verschiedenen Hardwareausrüstern. Vorzugsweise ist die Konfigurationseinheit dazu vorgesehen, die Konfiguration des Transceivers mehrmalig und/oder wiederholt zu ändern.

Das Transceiverinterface kann Teil eines Transceiversystems sein. Das Transceiversystem, insbesondere ein optisches Transceiversystem, ist vorteilhaft dazu vorgesehen, zumindest den Transceiver zu konfigurieren und/oder zu rekonfigurieren. Das Transceiversystem kann zur Durchführung eines Testbetriebs, insbesondere zu einem Test des Transceivers, und/oder zu einer Durchführung eines Messbetriebs, insbesondere zu einem Messen, einem Ausmessen und/oder einem Vermessen des Transceivers und/oder zu einem Messen, einem Ausmessen und/oder einem Vermessen eines weiteren Objekts mittels des Transceivers, vorgesehen sein. Insbesondere ist zumindest der Transceiver Teil des Transceiversystems. Bei dem Transceiversystem könnte es sich beispielsweise um ein SFP-, insbesondere ein SFP-DD-, SFP+, SFP28- und/oder CSFP-, und/oder ein CFP-, insbesondere ein CFP2-, CFP4- und/oder CFP8-, und/oder ein QSFP-, insbesondere ein QSFP+-, QSFP14-, QSFP28-, QSFP56- und/oder QSFP-DD-, und/oder ein XFP- und/oder OSFP- und/oder NGSFP-, insbesondere ein NGSFP-DD-, und/oder OSFP-XD-Transceiversystem oder dergleichen handeln. Das Transceiversystem könnte zumindest ein Datenübertragungssystem und/oder ein Kommunikationssystem umfassend das Transceiverinterface und zumindest den Transceiver sein. Bevorzugt weist das Transceiverinterface zumindest eine Speichereinheit zur Speicherung von zumindest Betriebsparametern und/oder Konfigurationseinstellungen auf.

Vorzugsweise weist das Transceiversystem zumindest eine serielle Schnittstelle zur Bereitstellung einer seriellen Verbindung zwischen dem Transceiverinterface und einer Datenübertragungseinheit. Dadurch kann ein besonders flexibles, effizientes und komfortables Transceiversystem bereitgestellt werden. Zudem kann eine hohe Vielseitigkeit an Verbindungsmöglichkeiten zwischen dem Transceiverinterface und anderen Datenübertragungseinheiten ermöglicht werden.

Bei der seriellen Schnittstelle kann es sich beispielsweise um eine RJ45- oder eine RS232-Schnittstelle handeln. Bei der von einem Transceiver verschiedenen Datenübertragungseinheit kann es sich beispielsweise um einen RJ-Stecker, insbesondere einen RJ45-Stecker, einen RS232-Stecker, einen Ethernet-Stecker oder einen anderweitigen Telefon- und/oder Internet-Stecker handeln. Das Transceiverinterface kann die serielle Schnittstelle aufweisen. Denkbar wäre, dass das Transceiverinterface zumindest einen Steckplatz zur Bereitstellung der seriellen Schnittstelle aufweist. Der Steckplatz kann beispielsweise ein RJ45- oder ein RS232-Steckplatz sein. Damit kann auf einen zusätzlichen Adapter verzichtet werden.

Besonders bevorzugt umfasst das Transceiversystem zumindest einen Adapter zur Verbindung mit dem Transceiverinterface und zur Bereitstellung einer seriellen Verbindung zwischen dem Transceiverinterface und der Datenübertragungseinheit. Bei dem Adapter handelt es sich vorteilhaft um ein Zubehörteil und/oder Nachrüstteil des Transceiversystems für das Transceiverinterface. Der Adapter ist vorzugsweise mobil, insbesondere tragbar. Insbesondere ist der Adapter zu einer Kommunikation mit zumindest dem Transceiverinterface vorgesehen. Der Adapter kann in zumindest den Transceiver-Steckplatz reversibel einsteckbar sein. Denkbar wäre, dass es sich bei der Datenübertragungseinheit um einen Transceiver handelt, wobei der Transceiver und der Transceiver-Steckplatz unterschiedlichen Typs sind, beispielsweise es sich bei dem Transceiver um einen XFP-Transceiver und es sich bei dem Transceiver-Steckplatz um einen SFP-Transceiver-Steckplatz handelt, sodass der Adapter vorzugsweise eine Kommunikation und/oder Verbindung zwischen dem Transceiver und dem Transceiver-Steckplatz unterschiedlichen Typs ermöglicht. Vorteilhaft ermöglicht der Adapter eine Kommunikation und/oder Verbindung zwischen einer von einem Transceiver verschiedenen Datenübertragungseinheit zu dem Transceiverinterface. Besonders bevorzugt ist der Adapter dazu vorgesehen, von einem SFP-Transceiver-Steckplatz auf einen RJ-45 Anschluss oder einen RS232-Anschluss eine serielle Verbindung zur Verfügung zu stellen, welche es insbesondere ermöglicht Netzwerk-Switche zu konfigurieren.

Das Transceiverinterface könnte möglicherweise ein stationäres Gerät sein. Bevorzugt ist das Transceiverinterface als ein Mobilgerät, insbesondere als Handheld und/oder Handgerät, ausgebildet. Bevorzugt bildet das Transceiverinterface eine Schnittstelle zwischen einer externen Einheit und dem Transceiver. Die externe Einheit ist insbesondere ein elektronisches, bevorzugt als eine Bedieneinheit und/oder Steuereinheit ausgebildetes, externes Gerät, welches zur Bedienung und/oder Steuerung des Transceiverinterface, und zwar bevorzugt zu der Konfiguration des Transceivers vorgesehen ist. Die externe Einheit kann ein Endgerät, vorteilhaft ein mobiles Endgerät sein. Bei der externen Einheit könnte es sich beispielsweise um einen, insbesondere festinstallierten, Computer und/oder ein Laptop und/oder ein Convertible und/oder ein Handy, insbesondere Smartphone, und/oder ein Tablet und/oder ein Phablet und/oder ein Personal Digital Assistant (PDA) und/oder ein gleichwertiges elektronisches Gerät und/oder eine spezielle Applikation zur Steuerung des Transceiverinterface und/oder zur Konfigurierung des Transceivers handeln. Möglicherweise erfolgt die Bedienung und/oder Steuerung des Transceiverinterface und/oder die Konfigurierung des Transceivers unmittelbar mittels eines, insbesondere auf dem externen Gerät ausführbaren, Browsers. Vorzugsweise ist die externe Einheit Teil des Transceiversystems. Das Transceiverinterface kann eine Kommunikationsschnittstelle, insbesondere eine leitergebundene und/oder drahtlose Kommunikationsschnittstelle, zur Kommunikation mit der externen Einheit aufweisen.

Hinsichtlich weiterer Beschreibungen von Ausgestaltungen und einer Funktionsweise der externen Einheit sowie eines Zusammenwirkens der externen Einheit mit dem Transceiverinterface, insbesondere einer Ausgestaltung und Funktion der Kommunikationsschnittstelle des Transceiverinterfaces, sei auf die deutschen Patentanmeldungen DE 10 2021 119 318 A1 mit der Anmeldenummer 10 2021 119 318.4 sowie auf DE 10 2021 119 316 A1 mit der Anmeldenummer 10 2021 119 316.8 verwiesen, deren Inhalt in diese Anmeldung aufgenommen wird. Ferner sie hinsichtlich einer Ausgestaltung und Funktionsweise der genannten Konfigurationseinheit ebenfalls auf die soeben genannten deutschen Patentanmeldungen DE 10 2021 119 318 A1 und DE 10 2021 119 316 A1 verwiesen.

Die Verbindungseinheit kann Teil der bereits genannten Kommunikationsschnittstelle des Transceiverinterfaces sein oder diese zumindest teilweise ausbilden. Bevorzugt weist die Verbindungseinheit zumindest einen eSIM-Chip auf. Alternativ oder zusätzlich kann die Verbindungseinheit eine SIM-Karte, insbesondere eine Micro-SIM oder Nano-SIM, und zwar eine anderweitige Chip-Karte aufweisen. Die Verbindungseinheit kann in und/oder an der Gehäuseeinheit und/oder der Leiterplatte angeordnet sein. Bevorzugt ist die Verbindungseinheit dazu vorgesehen, eine Mobil- und/oder Internetverbindung zur Konfiguration des Transceivers bereitzustellen, bevorzugt unabhängig von einer externen, internet- und/oder mobilfunkfähigen Einheit, insbesondere unabhängig von dem externen Mobilgerät.

Der Transceiver kann ein elektrischer, insbesondere ein elektrisch-elektrischer, Transceiver oder vorzugsweise ein optischer, insbesondere ein optisch-elektrischer, Transceiver (OT) sein. Liegt ein optischer Transceiver vor, so ist der Transceiver vorzugsweise dazu vorgesehen, eine optisch-elektrische Empfangsvorrichtung und eine elektrisch-optische Sendevorrichtung bereitzustellen. Der optische Transceiver könnte zumindest optische Signale von zumindest einer Datenübertragungseinheit, insbesondere einer Faser, wie beispielsweise einer Glasfaser, empfangen und/oder die optischen Signale in zumindest elektrische Signale umwandeln. Der Transceiver ist ein steckbarer, insbesondere ein pluggable, Transceiver. Bei dem Transceiver könnte es sich beispielsweise um einen SFP-, insbesondere einen SFP-DD-, SFP+, SFP28- oder CSFP-, einen CFP-, insbesondere einen CFP2-, CFP4- oder CFP8-, einen QSFP-, insbesondere einen QSFP+-, QSFP14-, QSFP28-, QSFP56- oder QSFP-DD-, einen OSFP-, NGSFP-, insbesondere ein NGSFP-DD-, oder OSFP-XD- oder einen XFP-Transceiver handeln. Der Transceiver könnte zur Anordnung, insbesondere zur Verbindung, und/oder zur Kommunikation mit einem Power Sourcing Equipment (PSE) vorgesehen sein, wobei es sich bei dem PSE beispielsweise um einen Router und/oder einen Hub und/oder vorteilhaft um eine Switch handeln könnte.

Der Transceiver könnte reversibel, insbesondere lösbar, und zwar vorzugsweise zerstörungsfrei lösbar, mit dem Transceiverinterface verbindbar, und zwar in das Transceiverinterface, und zwar den Transceiver-Steckplatz einsteckbar sein. Insbesondere ermöglicht der Transceiver-Steckplatz eine leitergebundene Kommunikation mit dem Transceiver. Der Transceiver-Steckplatz ist vorteilhaft eine elektrische und/oder elektronische Schnittstelle, insbesondere Verbindungsschnittstelle, welche zur, insbesondere elektrischen, Verbindung mit dem Transceiver vorgesehen ist. In dem eingesteckten Zustand kann der Transceiver mittels des Transceiver-Steckplatzes mit der Konfigurationseinheit kommunizieren. Bei einem Verfahren zum Betrieb des Transceiverinterfaces kann der Transceiver in den Transceiver-Steckplatz eingesteckt werden. Vorteilhaft nimmt der Transceiver-Steckplatz in zumindest einem verbundenen Zustand, und zwar dem eingesteckten Zustand den Transceiver zumindest teilweise auf. In einem unverbundenen Zustand ist zumindest der Transceiver separat zu dem Transceiverinterface angeordnet.

Der Transceiver-Steckplatz kann zumindest ein Kontaktelement, vorteilhaft ein standardisiertes und/oder genormtes, Transceiver-Kontaktelement, insbesondere Transceiver-Steckverbinderelement und vorteilhaft Einbausteckverbinderelement, aufweisen, welches zur, insbesondere elektrischen, Kontaktierung mit dem Transceiver vorgesehen ist. Ein standardisiertes und/oder genormtes Objekt soll in diesem Zusammenhang vorteilhaft ein Objekt sein, welches zumindest teilweise genormte Maße, insbesondere Außenmaße, und/oder eine zumindest teilweise genormte Form und/oder genormte Baukomponenten aufweist und/oder dazu vorgesehen ist, standardisierte Datenübertragungsraten bereitzustellen. Der Transceiver-Steckplatz könnte eine Kommunikation mit dem Transceiver bei Datenübertragungsraten von zumindest 10 Gbit/s, insbesondere von zumindest 50 Gbit/s, vorteilhaft von zumindest 100 Gbit/s, insbesondere von zumindest 200 Gbit/s, vorzugsweise von zumindest 400 Gbit/s, bevorzugt von 800 Gbit/s und besonders bevorzugt von zumindest 1600 Gbit/s bereitstellen.

Insbesondere ist die Gehäuseeinheit dazu vorgesehen, zumindest den Großteil des Transceivers in dem eingesteckten Zustand zu lagern und/oder zu haltern. Alternativ wäre auch denkbar, dass der Transceiver in dem eingesteckten Zustand zumindest abschnittsweise oder vollständig kontaktfrei zu der Gehäuseeinheit angeordnet ist. Vorteilhaft ist der Aufnahmeraum dazu vorgesehen, zumindest einen Großteil einer Längserstreckung des Transceivers in dem eingesteckten Zustand aufzunehmen. Bevorzugt nimmt der Aufnahmeraum in dem eingesteckten Zustand des Transceivers zumindest 40 %, vorteilhaft zumindest 60 %, vorzugsweise zumindest 70 % und besonders bevorzugt zumindest 85 % der Längserstreckung des Transceivers auf. Denkbar wäre auch, dass der gesamte Transceiver, insbesondere die gesamte Längserstreckung des Transceivers, in dem eingesteckten Zustand in dem Aufnahmeraum angeordnet sein kann. In dem eingesteckten Zustand des Transceivers könnten höchstens 30 %, vorteilhaft höchstens 20 % und vorzugsweise höchstens 10 % der Längserstreckung des Transceivers außerhalb des Aufnahmebereichs angeordnet sein. Der Transceiver könnte in dem eingesteckten Zustand zumindest teilweise aus der Gehäuseeinheit herausragen. Bevorzugt ragt der Transceiver, insbesondere die Längserstreckung des Transceivers, in dem eingesteckten Zustand höchstens zu 40 %, vorteilhaft höchstens zu 20 % und bevorzugt höchstens zu 10 %, aus der Gehäuseeinheit heraus und/oder hinaus. Unter einer "Längserstreckung" eines Objekts soll in diesem Zusammenhang eine Erstreckung des Objekts in einer Längserstreckungsrichtung des Objekts verstanden werden. Die "Längserstreckungsrichtung" des Objekts ist eine Richtung, welche parallel zu einer längsten Kante und/oder Seite eines kleinsten das Objekt gerade noch umschließenden, insbesondere gedachten, Quaders ausgerichtet ist und/oder verläuft. Ferner soll vorliegend unter dem Ausdruck "zu einem Großteil" zumindest 55 %, vorteilhaft zumindest 65 %, vorzugsweise zumindest 75 %, besonders bevorzugt zumindest 85 % und besonders vorteilhaft höchstens 95 % eines Flächen- und/oder Volumenanteils verstanden werden.

Besonders bevorzugt ist die Gehäuseeinheit dazu vorgesehen, zumindest einen Großteil eines Gewichts des Transceivers in dem eingesteckten Zustand aufzunehmen. Die Gehäuseeinheit kann in dem eingesteckten Zustand des Transceivers zumindest 40 %, vorteilhaft zumindest 50 % und vorzugsweise zumindest 80 % des Gewichts des Transceivers aufnehmen und/oder halten und/oder tragen. Die Gehäuseeinheit kann zu einem Abstützen und/oder Aufliegen des Transceivers in dem eingesteckten Zustand vorgesehen sein. Die Gehäuseeinheit kann in dem Aufnahmeraum zumindest eine Auflagefläche zu einem zumindest abschnittsweisen Aufliegen des Transceivers in dem eingesteckten Zustand aufweisen.

Die Gehäuseeinheit kann ein Außengehäuse aufweisen. Vorzugsweise weist die Gehäuseeinheit ein Innengehäuse auf. Das Außengehäuse kann das Innengehäuse zumindest zu zwei, vorteilhaft zumindest zu drei und vorzugsweise zumindest zu fünf, Seiten umschließen. Insbesondere ist der Aufnahmeraum zumindest abschnittsweise von dem Außengehäuse und/oder dem Innengehäuse begrenzt. Vorteilhaft ist der Aufnahmeraum von zumindest einer Gehäusewandung der Gehäuseeinheit begrenzt. Der Aufnahmeraum kann von zumindest zwei, vorteilhaft von zumindest drei und vorzugsweise von zumindest fünf Seiten begrenzt sein. Zumindest eine Gehäusedeckenwandung der Gehäuseeinheit und/oder eine Gehäusebodenwandung der Gehäuseeinheit kann/können den Aufnahmeraum begrenzen. Die Gehäusewandung kann Teil des Außengehäuses oder des Innengehäuses sein. Das Außengehäuse kann zumindest ein erstes Außengehäuseelement und zumindest ein zweites Außengehäuseelement aufweisen. Bevorzugt ist das erste Außengehäuseelement als ein Gehäusedeckel ausgebildet. Das zweite Außengehäuseelement kann als ein Gehäuseboden ausgebildet sein. Das Innengehäuse kann in einem zusammengebauten Zustand der Gehäuseeinheit zwischen dem ersten Außengehäuseelement und dem zweiten Außengehäuseelement angeordnet sein. Das Innengehäuse kann auf und/oder an dem ersten Außengehäuseelement und/oder dem zweiten Außengehäuseelement angeordnet sein. Insbesondere ist das Innengehäuse in einer Draufsicht auf eine Haupterstreckungsebene der Gehäuseeinheit oberhalb des zweiten Außengehäuseelements angeordnet. Der Aufnahmeraum kann sich zumindest abschnittsweise oder vollständig innerhalb des Innengehäuses erstrecken.

Um eine Konstruktion eines Transceiverinterfaces weiter zu verbessern, wird vorgeschlagen, dass die Gehäuseeinheit zur Aufnahme zumindest eines Großteils eines weiteren Transceivers zumindest einen weiteren Aufnahmeraum aufweist, welcher sich zumindest abschnittsweise mit dem Aufnahmeraum überschneidet. Durch eine derartige Ausgestaltung kann ferner ein sehr kompaktes Transceiverinterface bereitgestellt werden, sodass wiederum eine Lagerhaltung und ein Transport des Transceiverinterface signifikant optimiert werden kann. Zudem kann eine Handhabbarkeit, eine Benutzerfreundlichkeit und ein Benutzerkomfort gesteigert werden. Des Weiteren kann eine hohe Sicherheit und verbesserte Stabilität einer Anbindung an einen Transceiver bereitgestellt werden. Außerdem kann mittels des Transceiverinterfaces, und zwar der Gehäuseeinheit des Transceiverinterfaces eine Halterung und/oder Lagerung zumindest eines Großteils des Transceivers bereitgestellt werden.

Das Transceiverinterface kann mehrere, insbesondere zumindest zwei oder zumindest drei, Transceiver-Steckplätze aufweisen, welche insbesondere zur wahlweisen Anbindung zumindest des Transceivers und vorteilhaft zumindest des weiteren Transceivers vorgesehen sind. Möglicherweise wäre denkbar, dass sich der Transceiver und zumindest der weitere Transceiver gleichzeitig in dem eingesteckten Zustand befinden und zumindest teilweise von der Gehäuseeinheit aufgenommen sind. Besonders bevorzugt kann die Gehäuseeinheit lediglich einen Transceiver, vorzugsweise genau einen Transceiver, und zwar den Transceiver oder den weiteren Transceiver in dem eingesteckten Zustand aufnehmen. Insbesondere wenn ein Transceiver sich in dem eingesteckten Zustand befindet und die Gehäuseeinheit den Transceiver aufnimmt, kann kein weiterer Transceiver eingesteckt und von der Gehäuseeinheit aufgenommen werden.

Eine Erstreckung, insbesondere eine Längs-, Breiten- und/oder Höhenerstreckung, des Aufnahmeraums und eine weitere Erstreckung, insbesondere eine weitere Längs-, Breiten- und/oder Höhenerstreckung, des weiteren Aufnahmeraums könnten sich zumindest zu 20 %, vorteilhaft zumindest zu 40 % und vorzugsweise zumindest zu 60 % überschneiden. Bevorzugt überschneiden sich der Aufnahmeraum und der weitere Aufnahmeraum zumindest abschnittsweise innerhalb des Innengehäuses der Gehäuseeinheit. Insbesondere überschneiden sich der Aufnahmeraum und der weitere Aufnahmeraum zumindest zu 30 %, vorteilhaft zumindest zu 50 % und vorzugsweise zumindest zu 80 %.

Vorteilhaft handelt es sich bei dem Transceiver um einen Transceiver ersten Typs. Beispielsweise kann der Transceiver als ein OSFP-Transceiver ausgebildet sein. Bei dem weiteren Transceiver kann es sich um einen Transceiver eines zweiten Typs handeln. Beispielsweise kann der weitere Transceiver als ein QSFP-DD-Transceiver ausgebildet sein. Der Transceiver-Steckplatz könnte zu einer Anbindung eines Transceivers des ersten Typs und eines Transceivers zumindest des zweiten Typs ausgebildet sein. Bevorzugt ist der Transceiver-Steckplatz dazu vorgesehen, lediglich Transceiver eines Typs, insbesondere Transceiver des ersten Typs, aufzunehmen.

Unter "vorgesehen" soll hier und im Folgenden speziell programmiert, eingerichtet, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass eine Einstecköffnung des Transceiver-Steckplatzes dem Aufnahmeraum zugewandt ist. Dadurch kann eine Konstruktion weiter optimiert und eine Verschmutzung und/oder eine Zerstörung eines Transceiver-Steckplatzes reduziert oder verhindert werden. Zudem kann ein Schutz des Transceiver-Steckplatzes vor äußeren Einflüssen, wie beispielsweise Verunreinigungen und/oder Temperaturschwankungen, verbessert und damit wiederum eine Lebensdauer des Transceiver-Steckplatzes gesteigert werden. Außerdem kann eine sichere und effiziente Anbindung eines Transceivers mit dem Transceiver-Steckplatz bereitgestellt werden.

Das Transceiverinterface kann zumindest eine Leiterplatte aufweisen. Auf der Leiterplatte kann zumindest der Transceiver-Steckplatz angeordnet sein. Die Leiterplatte kann mit dem ersten und/oder dem zweiten Außengehäuseelement verbunden sein. Vorteilhaft ist die Leiterplatte kraft- und/oder form- und/oder stoffschlüssig mit zumindest dem zweiten Außengehäuseelement verbunden und insbesondere mittels einer kraft- und/oder form- und/oder stoffschlüssigen Verbindung an zumindest dem zweiten Außengehäuseelement angeordnet. Bevorzugt ist das Innengehäuse auf und/oder an der Leiterplatte angeordnet. Die Leiterplatte kann den Aufnahmeraum zumindest teilweise begrenzen. Insbesondere begrenzen die Leiterplatte und zumindest das Innengehäuse gemeinsam zumindest abschnittsweise oder vollständig den Aufnahmeraum. Bevorzugt begrenzen das Innengehäuse und zumindest die Leiterplatte den weiteren Aufnahmeraum zumindest abschnittsweise oder vollständig. Das Innengehäuse kann den Transceiver-Steckplatz zumindest abschnittsweise umgeben und/oder umgreifen. Vorzugsweise begrenzt zumindest der Transceiver-Steckplatz den Aufnahmeraum zumindest zu einer Seite. Die Einstecköffnung kann zumindest zu zwei oder zumindest zu drei Seiten von dem Innengehäuse umgeben sein. Dadurch kann ein vorteilhaft hoher Schutz einer Einstecköffnung eines Transceiver-Steckplatzes beispielsweise vor Umwelteinflüssen gewährleistet werden. Insbesondere ist der Transceiver in dem eingesteckten Zustand in der Einstecköffnung des Transceiver-Steckplatzes angeordnet.

Zudem wird vorgeschlagen, dass die Gehäuseeinheit zumindest eine Durchführungsöffnung zur Durchführung des Transceivers zu dem Transceiver-Steckplatz aufweist, welche an einem zu der Einstecköffnung des Transceiver-Steckplatzes gegenüberliegenden Ende der Gehäuseeinheit angeordnet ist. Damit kann ein bevorzugt großer Aufnahmeraum zur Aufnahme eines Transceivers in einem eingesteckten Zustand bereitgestellt und damit eine Halterung des Transceivers in dem eingesteckten Zustand verbessert werden. Ferner kann damit wiederum eine Konstruktion eines Transceiverinterfaces optimiert sowie eine Handhabung für einen Benutzer erleichtert und komfortabler gestaltet werden.

Insbesondere ist die Durchführungsöffnung an einem gegenüberliegenden Ende der Gehäuseeinheit zu der Einstecköffnung des Transceiver-Steckplatzes angeordnet. Vorteilhaft befinden sich die Durchführungsöffnung und die Einstecköffnung an sich gegenüberliegenden Enden der Gehäuseeinheit. Bevorzugt sind die Einstecköffnung und die Durchführungsöffnung fluchtend zueinander angeordnet. Ein Objekt und/oder eine Richtung, welche zumindest abschnittsweise fluchtend zu einem weiteren Objekt und/oder einer weiteren Richtung ausgerichtet ist/sind, weicht/weichen um weniger als 10 %, vorzugsweise weniger als 5 % und besonders bevorzugt weniger als 2 % von einer Ausrichtung der weiteren Richtung und/oder Anordnung und/oder Ausrichtung des weiteren Objekts ab. Das Innengehäuse und/oder das Außengehäuse, insbesondere das erste Außengehäuseelement und/oder das zweite Außengehäuseelement, kann/können die Durchführungsöffnung zumindest teilweise aufweisen oder ausbilden oder die Durchführungsöffnung zumindest zu einer Seite begrenzen. Vorteilhaft weist das erste Außengehäuseelement die Durchführungsöffnung zumindest teilweise auf oder begrenzt die Durchführungsöffnung zumindest zu einer Seite, bevorzugt zumindest zu drei und besonders bevorzugt zumindest zu vier Seiten. Das Innengehäuse kann die Durchführungsöffnung zumindest zu einer Seite, vorteilhaft zumindest zu zwei Seiten begrenzen. Der Aufnahmeraum kann sich zumindest zwischen der Durchführungsöffnung und der Einstecköffnung des Transceiver-Steckplatzes erstrecken. Der Aufnahmeraum könnte sich zusätzlich auch außerhalb, in einem Umgebungsbereich der Durchführungsöffnung, erstrecken und insbesondere durch zumindest das zweite Außengehäuseelement begrenzt sein. Ein Benutzer kann den Transceiver durch die Durchführungsöffnung in den Transceiver-Steckplatz einstecken. Denkbar wäre, dass das Transceiverinterface, insbesondere die Gehäuseeinheit, noch weitere Durchführungsöffnungen zur Durchführung zumindest des Transceivers aufweist.

In einem weiteren Aspekt der Erfindung, welcher insbesondere sowohl eigenständig als auch in Kombination mit den übrigen Aspekten der Erfindung betrachtet werden kann, wird vorgeschlagen, dass das Transceiverinterface zumindest einen weiteren Transceiver-Steckplatz aufweist, welcher zur Anbindung eines weiteren Transceivers, insbesondere des bereits genannten weiteren Transceivers, vorgesehen ist und welcher in einem eingesteckten Zustand des Transceivers in dem Transceiver-Steckplatz zur Anbindung des weiteren Transceivers blockiert ist. Durch eine derartige Ausgestaltung kann eine besonders kompakte, effiziente und komfortable Konstruktion bereitgestellt werden. Außerdem kann eine intuitive und benutzerfreundliche Anwendung ermöglicht und eine Effizienz weiter gesteigert werden.

Insbesondere ist der weitere Transceiver-Steckplatz dazu vorgesehen, zumindest den weiteren Transceiver aufzunehmen. Der weitere Transceiver-Steckplatz könnte zu einer Anbindung eines Transceivers des ersten Typs und eines Transceivers zumindest des zweiten Typs ausgebildet sein. Bevorzugt ist der weitere Transceiver-Steckplatz dazu vorgesehen, lediglich Transceiver eines Typs, insbesondere Transceiver des zweiten Typs, aufzunehmen.

Ferner können die Beschreibungen und Ausführungen hinsichtlich einer Anordnung des Transceiver-Steckplatzes auch auf den weiteren Transceiver-Steckplatz übertragen werden. Der weitere Transceiver-Steckplatz kann den weiteren Aufnahmeraum zumindest zu einer Seite begrenzen. Bevorzugt erstreckt sich der weitere Aufnahmeraum ausgehend von zumindest dem weiteren Transceiver-Steckplatz. Vorteilhaft sind die bereits ausgeführten Beschreibungen und Ausführungen zum Aufnahmeraum auch auf den weiteren Aufnahmeraum übertragbar, insbesondere unter Berücksichtigung der Bezugnahme zum weiteren Transceiver-Steckplatz.

Insbesondere ist eine Anbindung des weiteren Transceivers in den weiteren Transceiver-Steckplatz in dem eingesteckten Zustand des Transceivers in dem Transceiver-Steckplatz blockiert. Der in den Transceiver-Steckplatz eingesteckte Transceiver kann die Anbindung des weiteren Transceivers in den weiteren Transceiver-Steckplatz blockieren. Ferner kann der in den weiteren Transceiver-Steckplatz eingesteckte weitere Transceiver eine Anbindung des Transceivers in den Transceiver-Steckplatz blockieren. Bevorzugt blockiert der in den weiteren Transceiver-Steckplatz eingesteckte weitere Transceiver in dem eingesteckten Zustand die Anbindung des Transceivers in den Transceiver-Steckplatz.

Wenn eine Steckrichtung des Transceiver-Steckplatzes und eine weitere Steckrichtung des weiteren Transceiver-Steckplatzes einen Winkel von zumindest 100° einschließen, kann eine Konstruktion hinsichtlich einer Kompaktheit und/oder Handhabbarkeit weiter gesteigert werden. Zudem kann eine Anordnung und/oder Halterung eines Transceivers in einem Transceiverinterface weiter verbessert und eine Stabilität bei Bereitstellung einer Anbindung erhöht werden.

Insbesondere schließen die Steckrichtung des Transceiver-Steckplatzes und die weitere Steckrichtung des weiteren Transceiver-Steckplatzes einen Winkel von zumindest 120° und vorteilhaft zumindest 130° ein. Ferner können die Steckrichtung des Transceiver-Steckplatzes und die weitere Steckrichtung des weiteren Transceiver-Steckplatzes einen Winkel von höchstens 170°, vorteilhaft höchstens 160° und bevorzugt höchstens 140° einschließen.

In einem weiteren Aspekt der Erfindung, welcher insbesondere sowohl eigenständig als auch in Kombination mit den übrigen Aspekten der Erfindung betrachtet werden kann, wird vorgeschlagen, dass das Transceiverinterface zumindest eine Sensoreinheit zur Sensierung zumindest einer Temperaturkenngröße zumindest des Transceivers in einem eingesteckten Zustand aufweist. Durch eine derartige Ausgestaltung kann eine Effizienz, hinsichtlich einer Produkteffizienz, gesteigert sowie eine Konstruktion weiter optimiert werden. Zudem kann eine Temperaturüberwachung bei Betrieb eines Transceiverinterfaces bereitgestellt und dadurch eine Sicherheit und ein Komfort für einen Benutzer gesteigert werden.

Die Sensoreinheit kann an der Leiterplatte und/oder der Gehäuseeinheit angeordnet sein. Bevorzugt ist die Sensoreinheit an dem Transceiver-Steckplatz und/oder zumindest dem weiteren Transceiver-Steckplatz angeordnet. Die Sensoreinheit kann zumindest teilweise einstückig, insbesondere einteilig, mit der Leiterplatte, der Gehäuseeinheit und/oder dem Transceiver-Steckplatz ausgebildet sein. Insbesondere sensiert die Sensoreinheit in dem Betriebszustand des Transceiverinterfaces, und zwar zumindest in dem eingesteckten Zustand des Transceivers in dem Transceiver-Steckplatz und/oder zumindest in dem eingesteckten Zustand des weiteren Transceivers in dem weiteren Transceiver-Steckplatz, zumindest die Temperaturkenngröße zumindest des Transceivers und/oder des weiteren Transceivers. Ist der Transceiver in dem Transceiver-Steckplatz eingesteckt, kann die Sensoreinheit die Temperaturkenngröße sensieren und/oder detektieren. Eine "Temperaturkenngröße" ist vorliegend eine mit zumindest einer Temperatur assoziierte Kenngröße, welche beispielsweise die Temperatur an sich, ein zeitabhängiger Temperaturverlauf und/oder eine Temperaturdifferenz sein kann. Des Weiteren könnte die Temperaturkenngröße eine elektrische Spannung und/oder eine elektrische Stromstärke sein, welche mit einer Temperatur, einem zeitabhängigen Temperaturverlauf und/oder einer Temperaturdifferenz korreliert ist. Bevorzugt ist anhand der sensierten und/oder detektierten Temperaturkenngröße eine vorliegende Temperatur, insbesondere eine Ist-Temperatur, im Betrieb des Transceiverinterfaces, vorzugsweise bei Konfiguration und/oder Rekonfiguration des Transceivers, ermittelbar.

Ferner soll unter einer "Sensoreinheit" in diesem Zusammenhang eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Die Sensoreinheit kann beispielsweise zumindest einen Heißleiter, einen Kaltleiter, einen Platin-Messwiderstand, einen Halbleiter-Temperatursensor, einen faseroptischen Temperatursensor, ein Thermoelement und/oder einen ferromagnetischen Temperatursensor aufweisen. Es sind verschiedene, dem Fachmann als sinnvoll erscheinende Sensoreinheiten denkbar. Das Transceiverinterface kann weitere Sensoreinheiten, und zwar zumindest eine weitere Sensoreinheit oder zumindest zwei weitere Sensoreinheiten aufweisen. Bevorzugt ist die weitere Sensoreinheit an dem weiteren Transceiver-Steckplatz zur Sensierung zumindest einer weiteren Temperaturkenngröße zumindest des weiteren Transceivers in dem eingesteckten Zustand. Die weitere Sensoreinheit kann zumindest teilweise einstückig, insbesondere einteilig, mit der Leiterplatte, der Gehäuseeinheit und/oder dem weiteren Transceiver-Steckplatz ausgebildet sein. Ist der weitere Transceiver in dem weiteren Transceiver-Steckplatz eingesteckt, kann die weitere Sensoreinheit die weitere Temperaturkenngröße sensieren und/oder detektieren.

Überschreitet die sensierte und/oder detektierte Temperaturkenngröße einen insbesondere vordefinierten Grenzwert, so kann das Transceiverinterface, beispielsweise mittels einer akustischen und/oder optischen Ausgabeeinheit, zumindest ein Signal, bevorzugt einen Hinweis, an den Benutzer ausgeben. Der Grenzwert kann eine Grenzwerttemperatur sein, welche beispielsweise höchstens 200°C, vorteilhaft höchstens 90°C, vorzugsweise höchstens 70°C und besonders bevorzugt höchstens 65°C betragen kann.

In einem weiteren Aspekt der Erfindung, welcher insbesondere sowohl eigenständig als auch in Kombination mit den übrigen Aspekten der Erfindung betrachtet werden kann, wird vorgeschlagen, dass das Transceiverinterface eine Fixiereinheit zur kraft- und/oder formschlüssigen Fixierung eines externen Mobilgeräts an der Gehäuseeinheit aufweist. Durch eine derartige Ausgestaltung kann eine Konstruktion verbessert und eine sichere und/oder stabile Halterung und/oder Fixierung eines externen Mobilgeräts an einem Transceiverinterface erreicht werden. Ferner kann damit ein besonders flexibles und/oder mobiles Transceiverinterface bereitgestellt sowie ein Benutzerkomfort und/oder eine Handhabbarkeit gesteigert werden. Außerdem kann ein Herunterfallen und/oder Loslösen des externen Mobilgeräts von dem Transceiverinterface, insbesondere während eines Betriebszustands, verhindert werden.

Insbesondere weist die Fixiereinheit zumindest ein Fixierelement auf, welches dazu vorgesehen ist, das externe Mobilgerät zumindest teilweise zu halten und/oder zu sichern und vorzugsweise eine Bewegung des externen Mobilgeräts in zumindest eine Raumrichtung und vorteilhaft in zumindest zwei Raumrichtungen zumindest teilweise und vorteilhaft vollständig zu beschränken oder zu verhindern. Bei der kraft- und/oder formschlüssigen Fixierung kann es sich um eine kraft- und/oder formschlüssige Verbindung, wie beispielsweise eine Rastverbindung und/oder Steckverbindung und/oder Drehverbindung und/oder Schraubverbindung und/oder Klemmverbindung und/oder Klettverbindung, handeln. Bevorzugt handelt es sich bei dem externen Mobilgerät um die zuvor genannte externe Einheit.

Denkbar wäre möglicherweise auch, dass die Fixiereinheit zu einer stoffschlüssigen Fixierung, wie beispielsweise zur Bereitstellung einer Klebeverbindung, vorgesehen ist. Bevorzugt ist die Fixiereinheit zu einer reversiblen, und zwar lösbaren Verbindung des externen Mobilgeräts mit der Gehäuseeinheit vorgesehen. Insbesondere ist das externe Mobilgerät auf die Gehäuseeinheit zur Fixierung drauflegbar. Die Fixiereinheit könnte zumindest ein Haftreibungselement aufweisen, welches zu einer Vergrößerung einer Haftreibung, insbesondere im Bereich einer Kontaktfläche zu dem externen Mobilgerät, vorgesehen ist. Das Haftreibungselement kann dabei als beliebiges Haftreibungselement ausgebildet sein, wie beispielsweise als raues und/oder angerautes Oberflächenelement, als Silikonelement und/oder vorteilhaft als Gummielement, insbesondere als Gummimatte und/oder als Gummibeschichtung.

Um eine besonders komfortable, benutzerfreundliche, einfach und handhabbare Fixierung eines externen Mobilgeräts mit einem Transceiverinterface bereitzustellen, wird vorgeschlagen, dass die Fixiereinheit zumindest ein Magnetelement zur Bereitstellung einer magnetischen Fixierung aufweist. Zudem kann damit auf aufwändige und/oder raumgreifende Fixierungen verzichtet werden.

Das Magnetelement kann mit einem Gegenmagnetelement des externen Mobilgeräts eine magnetische Verbindung zur Fixierung des externen Mobilgeräts an der Gehäuseeinheit eingehen. Die Fixiereinheit könnte genau ein Magnetelement aufweisen. Denkbar wäre, dass das Magnetelement eine runde oder ovale Form aufweist und/oder als Kreisscheibe oder Ring ausgebildet ist. Vorteilhaft weist die Fixiereinheit zumindest zwei, vorzugsweise zumindest drei oder mehr Magnetelemente auf, welche insbesondere zueinander identisch ausgebildet sein können. Die Magnetelemente könnten nebeneinander angeordnet sein. Bevorzugt sind zumindest drei Magnetelemente in der Form eines Dreiecks gegenüberliegend zueinander angeordnet. Das externe Mobilgerät könnte zumindest teilweise und vorzugsweise vollständig auf die Gehäuseeinheit drauflegbar sein. Bei dem Verfahren zum Betrieb des Transceiverinterfaces kann das externe Mobilgerät zumindest teilweise auf die Gehäuseeinheit gelegt werden. In einem angeordneten Zustand des externen Mobilgeräts auf der Gehäuseeinheit könnten zumindest 10 %, vorteilhaft zumindest 30 %, bevorzugt zumindest 50 % und besonders bevorzugt zumindest 80 % einer Haupterstreckung des externen Mobilgeräts auf der Gehäuseeinheit aufliegen. Die Fixiereinheit ist vorteilhaft zumindest im Wesentlichen flächig ausgebildet. Insbesondere weist die Fixiereinheit eine zumindest im Wesentlichen parallel zu einer Haupterstreckungsebene der Gehäuseeinheit angeordnete Haupterstreckungsebene auf, wobei eine Ausrichtung einer Ebene, insbesondere der Haupterstreckungsebene der Fixiereinheit, um höchstens 8°, vorteilhaft um höchstens 5° und besonders vorteilhaft um höchstens 1° von einer Ausrichtung einer Bezugsebene, insbesondere der Haupterstreckungsebene der Gehäuseeinheit, abweicht. Vorteilhaft ist die Fixiereinheit zumindest teilweise und bevorzugt vollständig von dem Außengehäuse umgeben und/oder abgedeckt. Die Fixiereinheit kann an dem Innengehäuse der Gehäuseeinheit angeordnet und/oder mit dem Innengehäuse verbunden sein. Denkbar wäre auch, dass die Fixiereinheit und das Innengehäuse zumindest teilweise einstückig, insbesondere einteilig, ausgebildet sind. Insbesondere ist die Fixiereinheit zumindest teilweise und vorteilhaft vollständig zwischen dem Innengehäuse und dem Außengehäuse der Gehäuseeinheit angeordnet.

Ferner wird vorgeschlagen, dass das Transceiverinterface eine Energieübertragungseinheit zur induktiven Bereitstellung von Energie für zumindest ein externes Mobilgerät, insbesondere für das bereits genannte externe Mobilgerät, aufweist. Dadurch kann eine Konstruktion sowie ein Benutzerkomfort weiter gesteigert werden, da zumindest ein externes Mobilgerät mittels eines Transceiverinterfaces induktiv geladen werden kann. Ferner kann ein Ladevorgang erleichtert und effizienter gestaltet werden, wobei das externe Mobilgerät lediglich in Kontakt mit der Gehäuseeinheit gebracht werden muss. Auf separate Anschlüsse und Steckverbindungen kann damit explizit verzichtet und somit ein Verschleiß von Steckkontakten durch An- und Abstecken verhindert werden. Darüber hinaus kann mittels der eingebauten Energieübertragungseinheit eine große Bandbreite an unterschiedlichen externen Mobilgeräten geladen werden.

Insbesondere weist die Energieübertragungseinheit zumindest eine Hauptfunktionalität in Form einer drahtlosen Energieübertragung, insbesondere in einer drahtlosen Energieversorgung von externen Mobilgeräten, auf. In zumindest einem Betriebszustand kann die Energieübertragungseinheit induktive Energie, beispielsweise für einen Ladevorgang des externen Mobilgeräts, bereitstellen. Zu der Bereitstellung von Energie weist die Energieübertragungseinheit zumindest ein Versorgungsinduktionselement auf, welches insbesondere zumindest eine Spule, beispielsweise eine Kupferspule, insbesondere zumindest eine Primärspule, aufweist und/oder als eine Spule ausgebildet ist und welches in dem Betriebszustand induktiv Energie bereitstellt. Insbesondere basiert die induktive Energieübertragung, und zwar der induktive Ladevorgang auf dem allgemein bekannten Qi-Charging-Standard, wobei Qi ein Standard des Wireless Power Consortiums (WPC) zur drahtlosen Energieübertragung mittels elektromagnetischer Induktion über kurze Distanzen ist. Ist das externe Mobilgerät auf der Gehäuseeinheit angeordnet, kann die Energieversorgungseinheit in dem Betriebszustand induktive Energie an das externe Mobilgerät übertragen, insbesondere das externe Mobilgerät aufladen.

Die Energieübertragungseinheit könnte zumindest zwei oder mehr Versorgungsinduktionselemente aufweisen, welche in dem Betriebszustand jeweils induktiv Energie bereitstellen könnten, und zwar insbesondere an ein einziges Aufnahmeinduktionselement oder an zumindest zwei oder mehrere Aufnahmeinduktionselemente des externen Mobilgeräts. Zumindest ein Teil der Versorgungsinduktionselemente könnten in einem Nahbereich zueinander angeordnet, beispielsweise in einer Reihe, in Form eines Kreises oder in Form einer Matrix angeordnet sein. Besonders bevorzugt weist die Energieübertragungseinheit genau ein Versorgungsinduktionselement, insbesondere genau eine Spule, auf, welche kreisförmig angeordnet ist. Die Fixiereinheit, insbesondere die Magnetelemente, könnten zumindest teilweise außerhalb der Energieübertragungseinheit, insbesondere außerhalb der kreisförmigen Spule, angeordnet sein. Vorteilhaft ist die Fixiereinheit, insbesondere sind die Magnetelemente, neben der Energieübertragungseinheit, insbesondere neben dem Versorgungsinduktionselement, und zwar zumindest abschnittsweise entlang eines Außenumfangs des Versorgungsinduktionselements angeordnet. Alternativ und/oder zusätzlich können die Fixiereinheit und die Energieübertragungseinheit zumindest teilweise überlappend, insbesondere entlang des Außenumfangs des Versorgungsinduktionselements, angeordnet sein. Die Fixiereinheit kann unmittelbar neben dem Versorgungsinduktionselement angeordnet sein und das Versorgungsinduktionselement zumindest abschnittsweise oder vollständig kontaktieren. Die Energieübertragungseinheit kann an dem Innengehäuse der Gehäuseeinheit angeordnet und/oder mit dem Innengehäuse verbunden sein. Denkbar wäre auch, dass die Energieübertragungseinheit und das Innengehäuse zumindest teilweise einstückig, insbesondere einteilig, ausgebildet sind. Insbesondere ist die Energieübertragungseinheit zumindest teilweise und vorteilhaft vollständig zwischen dem Innengehäuse und dem Außengehäuse der Gehäuseeinheit angeordnet.

Ferner kann das Transceiverinterface eine Energieversorgungseinheit zur autarken Energieversorgung zumindest der Konfigurationseinheit, der Kommunikationsschnittstelle und/oder der Verbindungseinheit aufweisen. Insbesondere ist die Energieversorgungseinheit dazu vorgesehen, die Konfiguration des Transceivers mittels der Konfigurationseinheit in zumindest dem Betriebszustand zu ermöglichen, und zwar vorzugsweise unabhängig von einer externen Energieversorgungsquelle, beispielsweise der externen Einheit. Hinsichtlich einer Ausgestaltung und Funktionsweise der genannten Energieversorgungseinheit sei ebenfalls auf die bereits genannten deutschen Patentanmeldungen DE 10 2021 119 318 A1 und DE 10 2021 119 316 A1 verwiesen, deren Inhalt in diese Anmeldung übernommen wird.

Die Gehäuseeinheit könnte in einer Draufsicht auf eine Haupterstreckungsebene der Gehäuseeinheit eine runde, ovale oder eckige, beispielsweise dreieckige oder viereckige, Form aufweisen. Ferner wird vorgeschlagen, dass die Gehäuseeinheit in einer Draufsicht auf eine Haupterstreckungsebene der Gehäuseeinheit, insbesondere die bereits genannte Haupterstreckungsebene, eine zumindest im Wesentlichen zumindest fünfeckige Außenkontur aufweist. Damit kann ein besonders handhabbares und kompaktes Transceiverinterface bereitgestellt sowie eine Konstruktion weiter verbessert werden.

Die Gehäuseeinheit kann eine Breitenerstreckung und/oder Längserstreckung von zumindest 5 cm, vorteilhaft von zumindest 8 cm, bevorzugt von zumindest 10 cm und besonders bevorzugt von zumindest 12 cm und insbesondere von höchstens 20 cm, besonders vorteilhaft von höchstens 15 cm aufweisen. Unter einer "Längserstreckung" eines Objekts soll in diesem Zusammenhang eine Erstreckung des Objekts in einer Längserstreckungsrichtung des Objekts verstanden werden. Die "Längserstreckungsrichtung" des Objekts ist eine Richtung, welche parallel zu einer längsten Kante und/oder Seite eines kleinsten das Objekt gerade noch umschließenden, insbesondere gedachten, Quaders ausgerichtet ist und/oder verläuft. Unter einer "Breitenerstreckung" eines Objekts soll in diesem Zusammenhang eine Erstreckung des Objekts in einer Breitenerstreckungsrichtung des Objekts verstanden werden. Die "Breitenerstreckungsrichtung" des Objekts ist eine Richtung, welche parallel zu einer zweitlängsten Kante und/oder Seite eines, insbesondere des genannten, kleinsten, das Objekt gerade noch umschließenden, insbesondere gedachten, Quaders ausgerichtet ist. Ferner kann die Gehäuseeinheit eine Höhenerstreckung von zumindest 3 cm, vorteilhaft zumindest 5 cm und vorzugsweise höchstens 15 cm und besonders bevorzugt höchstens 10 cm aufweisen.

Die Außenkontur der Gehäuseeinheit kann wabenförmig ausgebildet sein. Insbesondere weist die Außenkontur der Gehäuseeinheit eine Wabenform auf. Vorteilhaft weist die Gehäuseeinheit eine zumindest sechseckige Außenkontur auf. Insbesondere ist die Außenkontur der Gehäuseeinheit zumindest sechseckig. Die Außenkontur kann einen äußeren Kantenbereich der Gehäuseeinheit bei Draufsicht auf die Haupterstreckungsebene der Gehäuseeinheit bilden. Unter einer "Haupterstreckungsebene" eines Objekts soll vorliegend eine Ebene verstanden werden, welche parallel zu einer größten Seitenfläche eines kleinsten gedachten Quaders ausgerichtet ist, welcher das Objekt gerade noch vollständig umschließt, und insbesondere durch den Mittelpunkt des Quaders verläuft. Ferner soll unter "zumindest im Wesentlichen" in diesem Zusammenhang verstanden werden, dass eine Abweichung von einem vorgegebenen Wert und/oder einer Ausrichtung und/oder einer Form weniger als 25 %, vorzugsweise weniger als 10 % und besonders bevorzugt weniger als 5 % des vorgegebenen Werts und/oder der Ausrichtung und/oder der Form beträgt.

Die Gehäuseeinheit, insbesondere das Außengehäuse und/oder das Innengehäuse, kann zumindest teilweise, zumindest zu einem Großteil oder vollständig aus einem Mineral, einem Kunststoff, einem Metall und/oder einem Verbundmaterial ausgebildet sein. Unter dem Ausdruck "zu einem Großteil" sollen vorliegend beispielsweise zumindest 55 %, vorteilhaft zumindest 65 %, vorzugsweise zumindest 75 %, besonders bevorzugt zumindest 85 % und besonders vorteilhaft höchstens 95 % eines Flächen- und/oder Volumen- und/oder Massenanteils verstanden werden. Denkbar wäre, dass die Gehäuseeinheit zumindest teilweise aus einem transluzenten oder transparenten Material ausgebildet ist. Die Gehäuseeinheit könnte zumindest teilweise aus einem diffusen Material ausgebildet sein, welches dazu vorgesehen ist, Licht zu streuen und/oder eine Lichtintensität zu verringern.

Die Gehäuseeinheit, insbesondere das Außengehäuse und/oder das Innengehäuse, kann zumindest teilweise oder vollständig einstückig, insbesondere einteilig, ausgebildet sein. Unter "einstückig" soll zumindest stoffschlüssig verbunden verstanden werden, beispielsweise durch einen Klebeprozess, einen Anspritzprozess und/oder Schweißprozess und/oder einen anderen, dem Fachmann als sinnvoll erscheinenden Prozess. Ferner soll unter "einteilig" in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, und/oder in einem Stanzverfahren und/der in einem Blechbiegeprozess und/oder in einem Druckprozess, beispielsweise einem 3D-Druckprozesses, und/oder mittels Thermoformen und/oder einem anderen, dem Fachmann als sinnvoll erscheinenden Verfahren aus dem einzelnen Rohling hergestellt.

Zur Kommunikation mit dem Benutzer kann das Transceiverinterface zumindest eine akustische Ausgabeeinheit aufweisen. Das Transceiverinterface könnte anhand von akustischen Signalen zumindest einen Betriebszustand, insbesondere Informationen bezüglich des Betriebszustands, dem Benutzer übermitteln und/oder mitteilen. Bevorzugt weist das Transceiverinterface zumindest eine optische Ausgabeeinheit auf.

Zudem wird vorgeschlagen, dass das Transceiverinterface eine Anzeigeeinheit zur Anzeige zumindest eines Betriebsstatus und/oder eines Betriebsmodus aufweist, welche zumindest abschnittsweise einer Außenkontur der Gehäuseeinheit folgt. Hierdurch kann ein Komfort, hinsichtlich eines Bedienkomforts, gesteigert werden. Zudem kann eine hohe Flexibilität und/oder Handhabbarkeit eines Transceiverinterfaces bereitgestellt werden, da mittels einer Anzeigeeinheit unterschiedliche Betriebsstatus, Betriebszustände und/oder Betriebsmodi des Transceiverinterfaces anzeigt werden können. Außerdem kann eine Konstruktion sowie eine Effizienz weiter optimiert werden.

Insbesondere umfasst die optische Ausgabeeinheit die Anzeigeeinheit. Die Anzeigeeinheit kann dazu vorgesehen sein, in zumindest dem Betriebszustand zumindest den Betriebsstatus und/oder den Betriebsmodus anzuzeigen. Es wäre denkbar, dass die Anzeigeeinheit zumindest ein Leuchtmittel, beispielsweise eine lichtemittierende Diode (LED), eine organisch lichtemittierende Diode (OLED) und/oder ein elektronisches Papier (e-paper, ePaper) oder dergleichen umfasst. Bevorzugt stellt die Anzeigeeinheit, insbesondere das Leuchtmittel, ein RGB-Farbsystem bereit. Möglicherweise könnte die Anzeigeeinheit den Betriebsstatus und/oder den Betriebsmodus anhand von unterschiedlichen Farben anzeigen. Beispielsweise könnte die Anzeigeeinheit in einem ersten Betriebsstatus und/oder ersten Betriebsmodus gelb und/oder in einem zweiten Betriebsstatus und/oder zweiten Betriebsmodus grün und/oder in einem dritten Betriebsstatus und/oder dritten Betriebsmodus blau leuchten. Ferner könnte die Anzeigeeinheit in dem Betriebszustand blinken und/oder dauerhaft leuchten, um den Betriebsstatus und/oder den Betriebsmodus anzuzeigen.

Bei dem ersten Betriebsstatus und/oder ersten Betriebsmodus könnte es sich beispielsweise um einen Status und/oder Modus handeln, in welchem das Transceiverinterface nach einer Kommunikationsverbindung mit der externen Einheit sucht und/oder versucht diese herzustellen. Die Anzeigeeinheit könnte in einem unverbundenen Zustand des Transceiverinterfaces mit der externen Einheit blinken. Besteht die Kommunikationsverbindung, insbesondere die drahtlose Kommunikationsverbindung und/oder die leitergebundene Kommunikationsverbindung, zwischen dem Transceiverinterface und der externen Einheit, könnte die Anzeigeeinheit diesen Betriebsstatus und/oder den Betriebsmodus, insbesondere zweiten Betriebsstatus und/oder zweiten Betriebsmodus, anhand einer dauerhaften Leuchtanzeige, insbesondere anhand eines dauerhaften Leuchtens zumindest des Leuchtmittels, anzeigen. Beispielsweise kann der zweite Betriebsstatus und/oder zweite Betriebsmodus ein verbundener Zustand des Transceiverinterfaces mit der externen Einheit sein.

Bevorzugt weist die Anzeigeeinheit einen Leuchtring auf oder ist als solcher ausgebildet. Der Leuchtring kann in Umfangsrichtung entlang der Außenkontur der Gehäuseeinheit angeordnet sein. Die Anzeigeeinheit kann dazu vorgesehen sein, zumindest einen Umgebungsbereich der Gehäuseeinheit zu beleuchten. Vorteilhaft beleuchtet die Anzeigeeinheit eine Auflagefläche, beispielsweise eines Tisches und/oder einer Hand und/oder dergleichen, auf welcher die Gehäuseeinheit in einem angeordneten, bevorzugt ruhenden, Zustand positioniert sein kann. Die Anzeigeeinheit könnte in einem Winkel von zumindest 30°, vorteilhaft zumindest 40° und vorzugsweise zumindest 45°, Licht auf die Auflagefläche leuchten und/oder Licht ausstrahlen und/oder abstrahlen und/oder abgeben. In dem Betriebszustand kann die Energieversorgungseinheit zumindest die Anzeigeeinheit autark mit Energie versorgen.

Außerdem wird vorgeschlagen, dass das Transceiverinterface eine Benutzerschnittstelle zur Interaktion mit zumindest einem Benutzer aufweist. Dadurch kann eine besonders benutzerfreundliche und komfortable Konstruktion bereitgestellt sowie eine Handhabbarkeit für einen Benutzer weiter verbessert werden. Zudem kann eine Sicherheit erhöht und eine Identifikation eines Benutzers durchgeführt werden, um insbesondere eine Benutzung von unzulässigen und/oder unbefugten Benutzern verhindern zu können.

Die Benutzerschnittstelle kann zumindest eine Bedieneinheit aufweisen. Unter einer "Bedieneinheit" soll hier eine Einheit verstanden werden, die zumindest ein Bedienelement aufweist, das direkt von und/oder durch den Benutzer betätigbar ist, und die dazu vorgesehen ist, durch eine Betätigung und/oder durch eine Eingabe von Parametern einen Prozess und/oder einen Zustand einer mit der Bedieneinheit gekoppelten Einheit, insbesondere der Konfigurationseinheit und/oder zumindest einer anderen Einheit des Transceiverinterfaces, wie beispielsweise der Energieübertragungseinheit, der Kommunikationseinheit, der Verbindungseinheit oder dergleichen, zu beeinflussen und/oder zu ändern. Bevorzugt ist die Bedieneinheit zumindest zu einem An- und Ausschalten und/oder zu einem Koppeln und/oder Verbinden des Transceiverinterfaces mit zumindest der externen Einheit, insbesondere dem externen Mobilgerät, vorgesehen. Bei der Bedieneinheit kann es sich um einen Druckknopf handeln, welcher von dem Benutzer drückbar ist. Alternativ kann die Bedieneinheit auch als ein Schalter, beispielsweise als ein Kippschalter, und/oder ein Touch-Display oder dergleichen ausgebildet sein.

Vorzugsweise weist die Benutzerschnittstelle eine Identifikationseinheit zur Identifikation des Benutzers aus. Die Identifikationseinheit kann den Benutzer zumindest haptisch und/oder optisch identifizieren. Vorteilhaft weist die Identifikationseinheit zumindest ein Sensorelement auf, welches als ein kapazitiver und/oder berührungsempfindlicher Sensor ausgebildet und dazu vorgesehen sein kann, den Benutzer aufgrund einer haptischen Rückmeldung, beispielsweise mittels eines Fingerabdrucks, zu identifizieren. Alternativ oder zusätzlich kann die Identifikationseinheit zumindest ein optisches Sensorelement, wie beispielsweise eine Kamera, aufweisen, welches dazu vorgesehen ist, den Benutzer mittels einer Gesichts- und/oder Augenerkennung und/oder anhand von charakterlichen Gesten zu identifizieren. Denkbar wäre auch, dass mittels Gesten des Benutzers Befehle und/oder Informationen zur Steuerung des Transceiverinterfaces übertragen und von der Identifikationseinheit zumindest erkannt und insbesondere verarbeitet werden können. Der Benutzer könnte mittels Gestikulation zumindest die Konfigurationseinheit und/oder eine andere Einheit des Transceiverinterfaces, wie beispielsweise die Energieübertragungseinheit, die Kommunikationseinheit, die Verbindungseinheit oder dergleichen, ansteuern und/oder zumindest einen Betriebszustand des Transceiverinterfaces beeinflussen und/oder ändern.

Dias Transceiverinterface und/oder das Transceiversystem soll/sollen hierbei nicht auf die oben beschriebene Anwendung und Ausführungsform beschränkt sein. Insbesondere kann/können das Transceiverinterface und/oder das Transceiversystem zu einer Erfüllung einer hierin beschriebenen Funktionsweise eine von einer hierin genannten Anzahl von einzelnen Elementen, Bauteilen und/oder Einheiten abweichende Anzahl aufweisen. Zudem sollen bei den in diesem Dokument angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Transceiversystem mit einem Transceiverinterface und einem Transceiver in einem eingesteckten Zustand,
- Fig. 2: eine Detailansicht des Transceiverinterfaces, welches eine Gehäuseeinheit aufweist,
- Fig. 3: eine Seitenansicht des Transceiverinterfaces gemäß Figur 2,
- Fig. 4: eine Rückansicht des Transceiverinterfaces gemäß Figur 2,
- Fig. 5: eine Innenansicht des Transceiverinterfaces auf ein Innengehäuse und einen Teil eines Außengehäuses der Gehäuseeinheit, wobei der Transceiver in einen Transceiver-Steckplatz des Transceiverinterfaces eingesteckt ist,
- Fig. 6: eine weitere Innenansicht des Transceiverinterfaces, wobei ein weiterer Transceiver in einen weiteren Transceiver-Steckplatz des Transceiverinterfaces eingesteckt ist,
- Fig. 7: eine Innenansicht des Transceiverinterfaces in einer Draufsicht, wobei der Transceiver in den Transceiver-Steckplatz eingesteckt ist und
- Fig. 8: das Transceiversystem mit einer externen Einheit, welche auf dem Transceiverinterface positioniert und durch eine Fixiereinheit des Transceiverinterfaces an der Gehäuseeinheit fixiert ist.

### Beschreibung des Ausführungsbeispiels

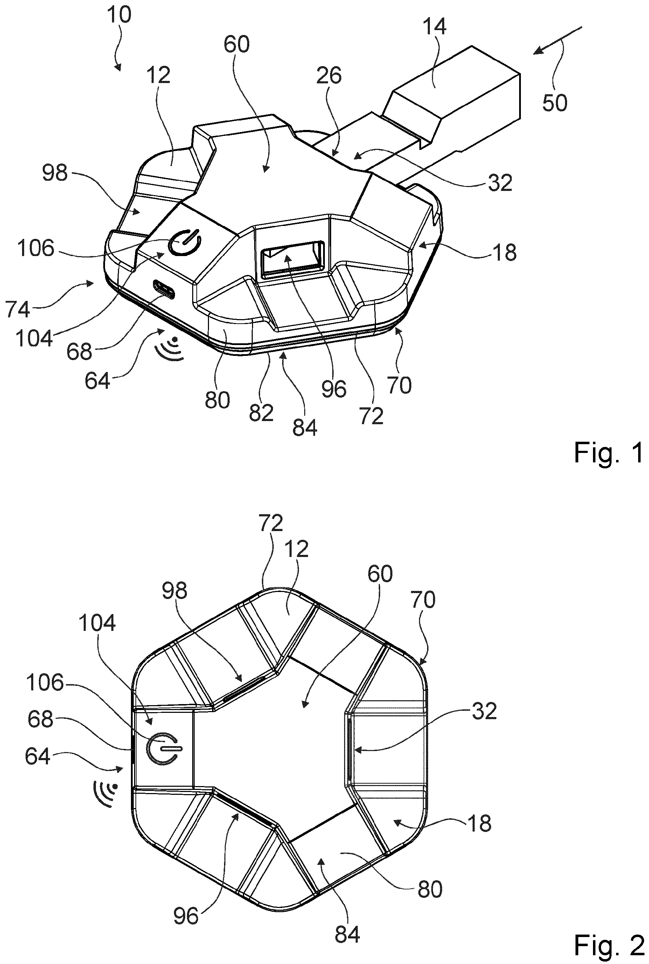

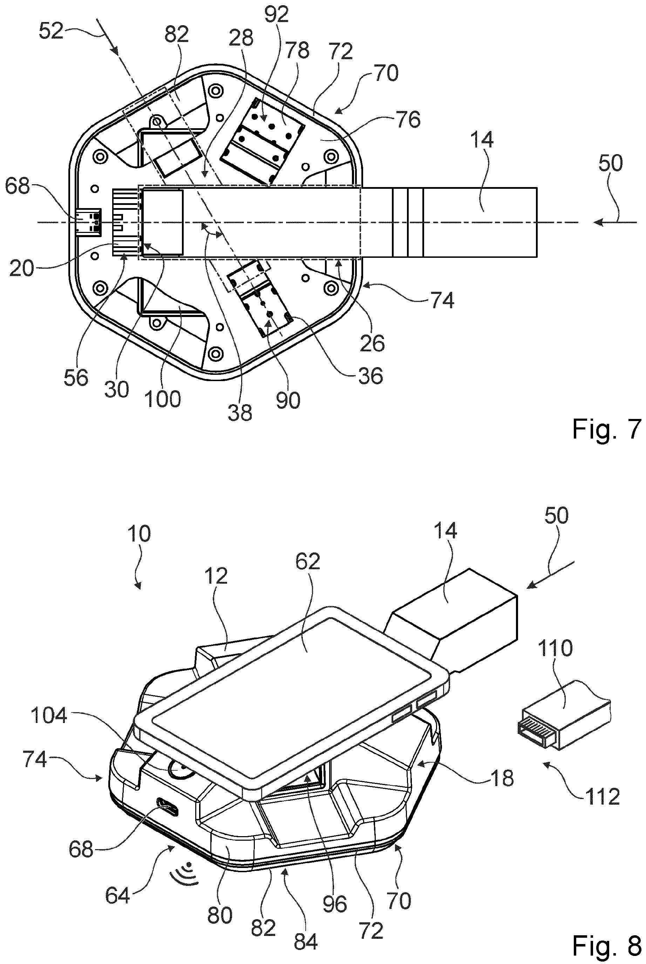

Figur 1 zeigt ein Transceiversystem 10 mit einem Transceiverinterface 12. Das Transceiversystem 10 ist als optisches Transceiversystem ausgebildet und dazu vorgesehen, zumindest einen Transceiver 14 zu konfigurieren und/oder zu rekonfigurieren. Bei dem Transceiversystem 10 handelt es sich vorliegend um ein SFP-DD, OSFP- und QSFP-DD-Transceiversystem. Alternativ und/oder zusätzlich könnte es sich bei dem Transceiversystem 10 um ein CFP-, ein XFP, SFP und/oder QSFP-Transceiversystem handeln. Das Transceiversystem 10 weist zumindest den Transceiver 14 auf. Bei dem Transceiver 14 handelt es sich um einen steckbaren Transceiver. Der Transceiver 14 könnte ein CFP-, ein XFP-, ein SFP-, SFP-DD-, ein QSFP-, ein QSFP-DD, ein NGSFP-, NGSFP-DD, ein OSFP- oder ein OSFP-XD-Transceiver sein. In der vorliegenden beispielhaften Ausführung ist der Transceiver 14 als ein OSFP-Transceiver ausgebildet. Das Transceiverinterface 12 ist zu einer Konfiguration und/oder Rekonfiguration zumindest des Transceivers 14 vorgesehen. Vorliegend ist das Transceiverinterface 12 mobil und/oder portabel, und zwar als tragbares Transceiverinterface 12 ausgebildet. Ferner zeigt die Figur 8 ebenfalls das Transceiversystem 10. Das Transceiversystem 10 weist eine externe Einheit, welche vorliegend als Mobilgerät 62 ausgebildet ist, auf. Das Mobilgerät 62 ist auf dem Transceiverinterface 12 angeordnet.

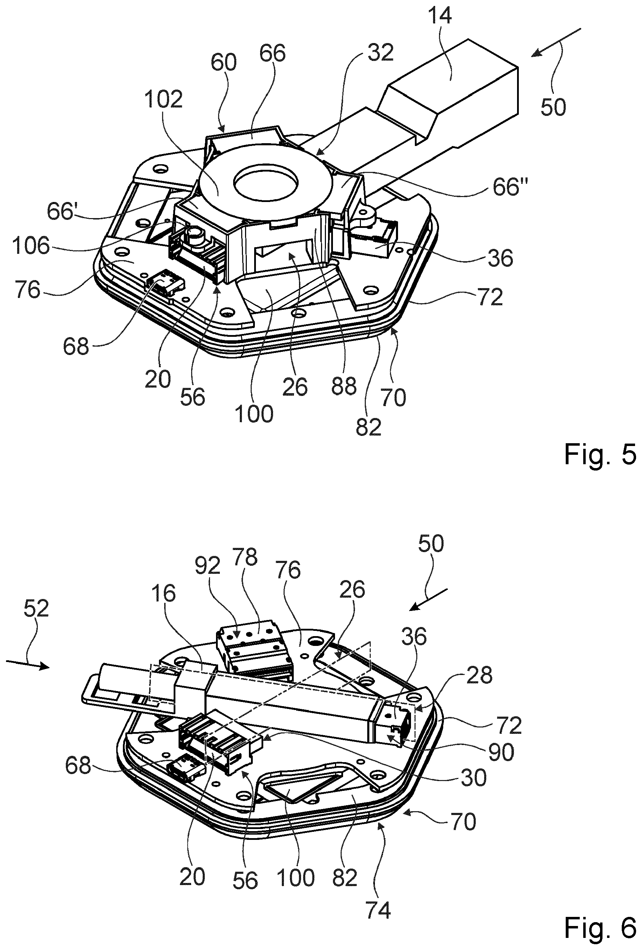

Das Transceiverinterface 12 weist eine Gehäuseeinheit 18 auf. Die Gehäuseeinheit 18 weist vorliegend ein Außengehäuse 84 und ein Innengehäuse 88 auf. In den Figuren 1 bis 4 sind jeweils geschlossene Ansichten der Gehäuseeinheit 18 des Transceiverinterfaces 12 dargestellt, während die Figuren 5 bis 7 einen geöffneten Zustand der Gehäuseeinheit 18 zeigen. In Figur 5 ist die Gehäuseeinheit 18 derart geöffnet, dass das Innengehäuse 88 dargestellt ist.

Zumindest die Figuren 1 bis 4 verdeutlichen, dass die Gehäuseeinheit 18 in einer Draufsicht auf eine Haupterstreckungsebene der Gehäuseeinheit 18 eine zumindest im Wesentlichen zumindest fünfeckige Außenkontur 70 aufweist. In dieser beispielhaften Ausgestaltung weist die Außenkontur 70 der Gehäuseeinheit 18 eine zumindest sechseckige Form auf. Die Außenkontur 70 der Gehäuseeinheit 18 ist zumindest sechseckig. Die Außenkontur 70 weist vorliegend eine Wabenform auf. Alternativ kann die Außenkontur 70 der Gehäuseeinheit 18 auch rund oder oval sein.

Zur Anbindung des steckbaren Transceivers 14 weist das Transceiverinterface 12 zumindest einen Transceiver-Steckplatz 20 auf. Vorliegend ist der Transceiver-Steckplatz 20 zur Anbindung des OSFP-Transceivers 14 vorgesehen. Der Transceiver 14 ist entlang einer Steckrichtung 50 in den Transceiver-Steckplatz 20 einsteckbar. Die Figuren 1, 5, 7 und 8 verdeutlichen die Anordnung des Transceivers 14 in dem Transceiver-Steckplatz 20 in einem eingesteckten Zustand. Die Gehäuseeinheit 18 weist vorliegend einen Aufnahmeraum 26 zur Aufnahme zumindest eines Großteils des Transceivers 14 in dem eingesteckten Zustand des Transceivers 14 in dem Transceiver-Steckplatz 20 auf. Die Gehäuseeinheit 18 ist dazu vorgesehen, zumindest den Großteil des Transceivers 14 in dem eingesteckten Zustand zu lagern und/oder zu haltern. Vorliegend nimmt der Aufnahmeraum 26 in dem eingesteckten Zustand des Transceivers 14 zumindest 50 % einer Längserstreckung des Transceivers 14 auf. Ferner ist die Gehäuseeinheit 18 dazu vorgesehen, zumindest einen Großteil eines Gewichts des Transceivers 14 in dem eingesteckten Zustand aufzunehmen. Dadurch kann ein Abbrechen und/oder Abknicken des Transceivers 14 sowie eine unsichere und/oder unstabile Anbindung des Transceivers 14 an den Transceiver-Steckplatz 20 vermieden und/oder verhindert werden.

Das Transceiverinterface 12 weist eine Leiterplatte 76 auf. Zumindest der Transceiver-Steckplatz 20 ist auf der Leiterplatte 76 angeordnet. Die Leiterplatte 76 ist in der Gehäuseeinheit 18 angeordnet und zumindest abschnittweise von der Gehäuseeinheit 18 umgeben. Vorliegend weist die Gehäuseeinheit 18, und zwar das Außengehäuse 84 ein erstes Außengehäuseelement 80 und zumindest ein zweites Außengehäuseelement 82 auf. Das erste Außengehäuseelement 80 ist als ein Gehäusedeckel ausgebildet (vgl. Figuren 1 bis 4). Das zweite Außengehäuseelement 82 ist vorliegend als Gehäuseboden ausgebildet (vgl. Figuren 1 bis 8). Die Leiterplatte 76 ist zumindest mit dem zweiten Außengehäuseelement 82 verbunden und daran angeordnet. Das Innengehäuse 88 ist zwischen dem ersten Außengehäuseelement 80 und dem zweiten Außengehäuseelement 82 angeordnet. Der Aufnahmeraum 26 erstreckt sich zumindest abschnittsweise innerhalb des Innengehäuses 88. Figur 5 zeigt eine Ansicht auf das Innengehäuse 88, welches oberhalb des zweiten Außengehäuseelements 82 angeordnet ist. Das Innengehäuse 88 ist vorliegend auf und/oder an der Leiterplatte 76 angeordnet. Das Innengehäuse 88 umgreift und/oder umgibt zumindest abschnittsweise den Transceiver-Steckplatz 20. Eine Einstecköffnung 30 des Transceiver-Steckplatzes 20 ist dem Aufnahmeraum 26 zugewandt. Die Einstecköffnung 30 ist zumindest zu drei Seiten von dem Innengehäuse 88 umgeben und/oder von dem Innengehäuse 88 begrenzt. Dadurch kann ein hoher Schutz der Einstecköffnung 30 des Transceiver-Steckplatzes 20 vor beispielsweise Umwelteinflüssen gewährleistet werden.

Die Gehäuseeinheit 18 weist zumindest eine Durchführungsöffnung 32 zur Durchführung des Transceivers 14 zu dem Transceiver-Steckplatz 20 auf (vgl. Figuren 1, 2 und 5). Die Durchführungsöffnung 32 ist an einem gegenüberliegenden Ende der Gehäuseeinheit 18 zu der Einstecköffnung 30 des Transceiver-Steckplatzes 20 angeordnet. Der Aufnahmeraum 26 erstreckt sich zumindest zwischen der Durchführungsöffnung 32 und der Einstecköffnung 30 des Transceiver-Steckplatzes 20. Vorliegend erstreckt sich der Aufnahmeraum 26 zusätzlich zumindest abschnittsweise außerhalb der Durchführungsöffnung 32 und ist von zumindest dem zweiten Außengehäuseelement 82 begrenzt. Das Innengehäuse 88 und zumindest das Außengehäuse 84 bilden vorliegend gemeinsam die Durchführungsöffnung 32 aus. Das Innengehäuse 88 und zumindest das Außengehäuse 84 begrenzen die Durchführungsöffnung 32 zumindest zu einer Seite. In dieser beispielhaften Ausgestaltung weist das Transceiverinterface 12 weitere Durchführungsöffnungen 96, 98, und zwar vorliegend insgesamt zumindest drei Durchführungsöffnungen 32, 96,98 auf.

Das Transceiverinterface 12 ist in dieser beispielhaften Ausgestaltung dazu vorgesehen, zumindest einen weiteren Transceiver 16 aufzunehmen. Hierzu weist das Transceiverinterface 12 zumindest einen weiteren Transceiver-Steckplatz 36 auf. Der weitere Transceiver 16 kann ein zu dem Transceiver 14 identisch ausgebildeter Transceiver sein oder einer gleichen Kategorie von Transceiver entsprechen. In dieser beispielhaften Ausgestaltung handelt es sich bei dem weiteren Transceiver 16 um einen QSFP-DD-Transceiver. Alternativ könnte der weitere Transceiver 16 auch als ein CFP-, ein XFP-, ein SFP-, SFP-DD-, ein QSFP-, ein QSFP-DD-, ein OSFP-, ein OSFP-XD-, ein NGSFP- oder ein NGSFP-DD-Transceiver ausgebildet sein. Der weitere Transceiver 16 ist zur Anbindung an den weiteren Transceiver-Steckplatz 36 vorgesehen. Der weitere Transceiver 50 ist entlang einer weiteren Steckrichtung 52 in den weiteren Transceiver-Steckplatz 36 einsteckbar (vgl. Figur 6). In einem eingesteckten Zustand ist der weitere Transceiver 16 in einem weiteren Aufnahmeraum 28 der Gehäuseeinheit 18 angeordnet. Die bereits ausgeführten Beschreibungen zum Aufnahmeraum 26 sind auch auf den weiteren Aufnahmeraum 28 unter Berücksichtigung der Bezugnahme zum weiteren Transceiver-Steckplatz 36 übertragbar. Ferner sind ebenfalls die Beschreibungen hinsichtlich einer Anordnung des Transceiver-Steckplatzes 20 auch auf den weiteren Transceiver-Steckplatz 36 übertragbar. Der weitere Transceiver 16 ist zur Anbindung an den weiteren Transceiver-Steckplatz 36 durch die weitere Durchführungsöffnung 98 durchführbar.

Vorliegend überschneidet sich der Aufnahmeraum 26 mit dem weiteren Aufnahmeraum 28 zumindest abschnittsweise. Figur 6 verdeutlicht, dass in dem eingesteckten Zustand des weiteren Transceivers 16 die Anbindung des Transceivers 14 an den Transceiver-Steckplatz 20 blockiert ist. Ferner verdeutlicht die Figur 7, dass in dem eingesteckten Zustand des Transceivers 14 in dem Transceiver-Steckplatz 20 die Anbindung des weiteren Transceivers 16 an den weiteren Transceiver-Steckplatz 36 blockiert ist.

Vorliegend schließen die Steckrichtung 50 des Transceiver-Steckplatzes 20 und die weitere Steckrichtung 52 des weiteren Transceiver-Steckplatzes 36 einen Winkel 38 von zumindest 100° ein (vgl. Figur 7). In dieser beispielhaften Ausgestaltung umfasst der Winkel 38 120°.

Das Transceiverinterface 12 weist einen zusätzlichen weiteren Transceiver-Steckplatz 78 auf (vgl. Figuren 6 und 7). Das Transceiverinterface 12 weist insgesamt zumindest drei Transceiver-Steckplätze 20, 36, 78 auf. Der zusätzliche weitere Transceiver-Steckplatz 78 ist zur Anbindung eines zusätzlichen weiteren Transceivers vorgesehen (nicht dargestellt). Die Beschreibungen hinsichtlich einer Anordnung des Transceiver-Steckplatzes 20 sind auch auf den zusätzlichen weiteren Transceiver-Steckplatz 78 übertragbar. Der zusätzliche weitere Transceiver ist zur Anbindung an den zusätzlich weiteren Transceiver-Steckplatz 78 durch die zusätzlich weitere Durchführungsöffnung 96 durchführbar.

Zur Sensierung zumindest einer Temperaturkenngröße zumindest des Transceivers 14 in dem eingesteckten Zustand weist das Transceiverinterface 12 zumindest eine Sensoreinheit 56 auf. Die Sensoreinheit 56 ist vorliegend an dem Transceiver-Steckplatz 20 angeordnet. Alternativ und/oder zusätzlich könnte die Sensoreinheit 56 an der Leiterplatte 76 und/oder der Gehäuseeinheit 18 angeordnet sein. Ist der Transceiver 14 in dem Transceiver-Steckplatz 20 eingesteckt, sensiert und/oder detektiert die Sensoreinheit 56 die Temperaturkenngröße. Anhand der sensierten und/oder detektierten Temperaturkenngröße ist eine vorliegende Temperatur, und zwar eine Ist-Temperatur, im Betrieb des Transceiverinterfaces 12 ermittelbar. Das Transceiverinterface 12 weist zumindest eine weitere Sensoreinheit 90 zur Sensierung zumindest einer weiteren Temperaturkenngröße zumindest des weiteren Transceivers 16 in dem eingesteckten Zustand auf. Die weitere Sensoreinheit 90 ist vorliegend an dem weiteren Transceiver-Steckplatz 36 angeordnet. Alternativ und/oder zusätzlich könnte die weitere Sensoreinheit 90 an der Leiterplatte 76 und/oder der Gehäuseeinheit 18 angeordnet sein. Ist der weitere Transceiver 16 in dem weiteren Transceiver-Steckplatz 90 eingesteckt, sensiert und/oder detektiert die weitere Sensoreinheit 90 die weitere Temperaturkenngröße. Ferner weist das Transceiverinterface 12 zumindest eine zusätzliche weitere Sensoreinheit 92 zur Sensierung zumindest einer zusätzlichen weiteren Temperaturkenngröße zumindest des zusätzlichen weiteren Transceivers in einem eingesteckten Zustand auf. Die zusätzliche weitere Sensoreinheit 92 ist vorliegend an dem zusätzlichen weiteren Transceiver-Steckplatz 78 angeordnet. Alternativ und/oder zusätzlich könnte die zusätzliche weitere Sensoreinheit 92 an der Leiterplatte 76 und/oder der Gehäuseeinheit 18 angeordnet sein. Ist der zusätzliche weitere Transceiver in dem zusätzlichen weiteren Transceiver-Steckplatz 92 eingesteckt, sensiert und/oder detektiert die zusätzliche weitere Sensoreinheit 92 die zusätzliche weitere Temperaturkenngröße.

Das Transceiverinterface 12 weist eine Fixiereinheit 60 zur kraft- und/oder formschlüssigen Fixierung des externen Mobilgeräts 62 an der Gehäuseeinheit 18 auf. Um eine besonders flexible, handhabbare und komfortable Konstruktion bereitzustellen, weist die Fixiereinheit 60 zumindest ein Magnetelement 66 zur Bereitstellung einer magnetischen Fixierung auf (vgl. Figur 5). Das Magnetelement 66 ist dazu vorgesehen, mit einem Gegenmagnetelement des externen Mobilgeräts 62 zu interagieren. Die Fixiereinheit 60 könnte genau ein Magnetelement 66 umfassen, welches beispielsweise eine runde oder ovale Form aufweist. In dieser beispielhaften Ausgestaltung weist die Fixiereinheit 60 insgesamt zumindest drei Magnetelemente 66, 66`, 66" auf, welche gemeinsam zur Bereitstellung der magnetischen Fixierung zusammenwirken. Die drei Magnetelemente 66, 66`, 66" weisen eine eckige Form auf und sind gegenüberliegend, vorliegend in Form eines Dreiecks, zueinander angeordnet (vgl. Figur 5). Die in Figur 7 gezeigte Fixierung zwischen dem externen Mobilgerät 62 und dem Transceiverinterface 12 besteht aufgrund der magnetischen Verbindung. Vorliegend ist die Fixiereinheit 60 zu einer reversiblen, und zwar lösbaren Verbindung des externen Mobilgeräts 62 an der Gehäuseeinheit 18 vorgesehen. Die Fixiereinheit 60, und zwar vorliegend die Magnetelemente 66, 66', 66" sind an dem Innengehäuse 88 der Gehäuseeinheit 18 angeordnet und mit diesem verbunden. Dabei ist die Fixiereinheit 60 vorteilhaft vollständig zwischen dem Innengehäuse 88 und dem Außengehäuse 84 der Gehäuseeinheit 18 angeordnet.

Ferner weist das Transceiverinterface 12 eine Energieübertragungseinheit 102 zur induktiven Bereitstellung von Energie für zumindest das externe Mobilgerät 62 auf (vgl. Figur 5). Die Energieübertragungseinheit 102 weist zumindest eine Hauptfunktionalität in Form einer drahtlosen Energieübertragung auf und stellt in zumindest einem Betriebszustand induktive Energie, und zwar zumindest für einen Ladevorgang des externen Mobilgeräts 62 bereit. Zur Bereitstellung von Energie weist die Energieübertragungseinheit 102umindest ein Versorgungsinduktionselement auf, welches vorliegend als eine Spule, und zwar eine Kupferspule ausgebildet ist. In dieser beispielhaften Ausgestaltung weist die Energieübertragungseinheit 102 genau ein Versorgungsinduktionselement auf, welches kreisförmig angeordnet ist. Figur 5 verdeutlicht, dass die Fixiereinheit 60, und zwar die Magnetelemente 66, 66', 66" zumindest teilweise überlappend mit der Energieübertragungseinheit 102, und zwar zumindest abschnittsweise entlang eines Außenumfangs der Energieübertragungseinheit 102 angeordnet sind. Die Energieübertragungseinheit 102 ist an dem Innengehäuse 88 der Gehäuseeinheit 18 angeordnet und mit dem Innengehäuse 88 verbunden. Die Energieübertragungseinheit 102 ist vorliegend vorteilhaft vollständig zwischen dem Innengehäuse 88 und dem Außengehäuse 84 der Gehäuseeinheit 18 angeordnet. Die vorliegende induktive Energieübertragung, und zwar der induktive Ladevorgang des externen Mobilgeräts 62 basiert auf dem allgemein bekannten Qi-Charging-Standard. Ist das externe Mobilgerät 62 auf der Gehäuseeinheit 18 angeordnet, überträgt die Energieversorgungseinheit 102 in dem Betriebszustand induktive Energie an das externe Mobilgerät 62, und lädt damit das externe Mobilgerät 62 auf (vgl. Figur 7).

Das Transceiverinterface 12 kommuniziert mittels einer Kommunikationsschnittstelle mit dem Mobilgerät 62. Die Kommunikation zwischen dem Transceiverinterface 12 erfolgt drahtlos und/oder leitungsgebunden. Vorliegend weist das Transceiverinterface 12 eine Drahtloskommunikationseinheit 64 zur drahtlosen Kommunikation mit dem Mobilgerät 62 auf. Mittels der Drahtloskommunikationseinheit 64 ist zumindest eine drahtlose Datenübertragung zu dem Mobilgerät 62 bereitgestellt. Ferner weist das Transceiverinterface 12 zumindest eine leitergebundene Kommunikationseinheit 68 auf. In dieser beispielhaften Ausgestaltung ist die leitergebundene Kommunikationseinheit 68 als ein USB-C-Anschluss ausgebildet. Die leitergebundene Kommunikationseinheit 68 ist zur Kommunikation, und zwar zur Datenübertragung und/oder zur Energieversorgung des externen Mobilgeräts 62 vorgesehen. Zusätzlich ist die leitergebundene Kommunikationseinheit 68 vorliegend zur Energieversorgung des Transceiverinterfaces 12 und/oder zu Aufladezwecken einer Energiespeichereinheit des Transceiverinterfaces 12 (nicht dargestellt) vorgesehen.

Das Transceiverinterface 12 weist eine Verbindungseinheit 74 zur Bereitstellung einer Mobil- und/oder Internetverbindung auf. Die Verbindungseinheit 74 ist dazu vorgesehen, eine Mobil- und/oder Internetverbindung zur Konfiguration des Transceivers 14 und/oder zumindest des weiteren Transceivers 16 bereitzustellen, und zwar unabhängig von einer externen, internet- und/oder mobilfunkfähigen Einheit, wie beispielsweise des externen Mobilgeräts 62. In dieser beispielhaften Ausgestaltung weist die Verbindungseinheit 74 zumindest einen eSIM-Chip auf. Alternativ und/oder zusätzlich könnte die Verbindungseinheit 74 auch eine SIM-Karte aufweisen. Ferner weist das Transceiverinterface 12 zumindest eine Speichereinheit 100 zur Speicherung von zumindest Betriebsparametern und/oder Konfigurationseinstellungen auf.

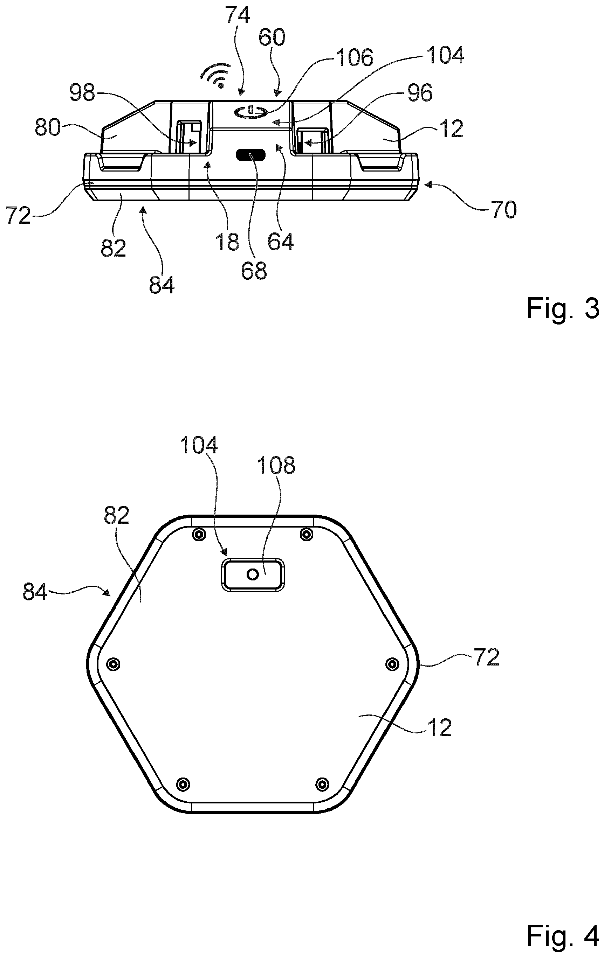

Zur Kommunikation und Interaktion mit einem Benutzer weist das Transceiverinterface 12 zumindest eine Benutzerschnittstelle 104 auf. Die Benutzerschnittstelle 104 weist zumindest eine Bedieneinheit 108 auf. Bei der Bedieneinheit 108 handelt es sich vorliegend um einen Druckknopf. Alternativ kann die Bedieneinheit 108 auch als ein Schalter, beispielsweise als ein Kippschalter, und/oder ein Touch-Display oder dergleichen ausgebildet sein. Die Bedieneinheit 108 ist zumindest zu einem An- und Ausschalten und/oder zu einem Koppeln und/oder Verbinden des Transceiverinterfaces 12 mit zumindest dem externen Mobilgerät 62 vorgesehen. In dieser beispielhaften Ausgestaltung ist die Bedieneinheit 108 an einer Unterseite der Gehäuseeinheit 18 angeordnet. Die Bedieneinheit 108 ist in das zweites Außengehäuseelement 82 integriert (vgl. Figur 4).

Zur Identifikation des Benutzers, um eine Benutzung von unzulässigen und/oder unbefugten Benutzern verhindern zu können, weist das Transceiverinterface 12 eine Identifikationseinheit 106 auf. Die Identifikationseinheit 106 identifiziert haptisch und/oder optisch den Benutzer. Die Identifikationseinheit 106 weist zumindest ein Sensorelement auf. Das Sensorelement ist vorliegend zumindest als ein berührungsempfindlicher Sensor ausgebildet, welcher dazu vorgesehen ist, den Benutzer mittels eines Fingerabdrucks zu identifizieren. Alternativ oder zusätzlich kann die Identifikationseinheit 106 zumindest ein optisches Sensorelement, wie beispielsweise eine Kamera, aufweisen, welches dazu vorgesehen ist, den Benutzer mittels einer Gesichts- und/oder Augenerkennung und/oder anhand von charakterlichen Gesten zu identifizieren. Ferner könnten mittels Gestikulation des Benutzers Befehle und/oder Informationen zur Steuerung des Transceiverinterfaces 12 übertragen und von der Identifikationseinheit 106 zumindest erkannt werden. Der Benutzer kann mittels Gestikulation zumindest einen Betriebszustand des Transceiverinterfaces 12 beeinflussen und/oder ändern. Die Identifikationseinheit 106 ist in dieser beispielhaften Ausgestaltung auf einer Oberseite des Transceiverinterfaces 12 angeordnet. Die Identifikationseinheit 106 ist in das erste Außengehäuseelement 80 zumindest teilweise integriert.

Zur Anzeige zumindest eines Betriebsstatus und/oder eines Betriebsmodus weist das Transceiverinterface 12 eine Anzeigeeinheit 72 auf. Denkbar wäre, dass das Transceiverinterface 12 zusätzlich eine akustische Ausgabeeinheit aufweist (vorliegend nicht dargestellt). Die Anzeigeeinheit 72 folgt in dieser beispielhaften Ausgestaltung zumindest abschnittsweise der Außenkontur 70 der Gehäuseeinheit 18. Die Anzeigeeinheit 72 ist als ein Leuchtring ausgebildet und in Umfangsrichtung entlang der Außenkontur 70 der Gehäuseeinheit 18 angeordnet. Die Anzeigeeinheit 72 ist dazu vorgesehen, den Betriebsstatus und/oder den Betriebsmodus anhand von unterschiedlichen Farben anzuzeigen. Ferner ist die Anzeigeeinheit 72 dazu vorgesehen, in einem Betriebszustand zumindest zu blinken und/oder dauerhaft zu leuchten, um den Betriebsstatus und/oder den Betriebsmodus oder Informationen bezüglich des Betriebsstatus und/oder den Betriebsmodus anzuzeigen.

Um ein besonders flexibles, effizientes und komfortables Transceiversystem 10, welches eine hohe Vielseitigkeit an Verbindungsmöglichkeiten aufweist, bereitzustellen, weist das Transceiversystem 10 zumindest eine serielle Schnittstelle 112 zur Bereitstellung einer seriellen Verbindung zwischen dem Transceiverinterface 12 und einer Datenübertragungseinheit (nicht dargestellt) auf. Bei der seriellen Schnittstelle 112 handelt es sich beispielsweise um eine RJ45- oder eine RS232-Schnittstelle. Bei der Datenübertragungseinheit handelt es sich beispielsweise um einen RJ45-Stecker, einen RS232-Stecker oder einen Ethernet-Stecker oder einen anderweitigen Telefon- und/oder Internet-Stecker.

Gemäß Figur 8 ist ersichtlich, dass das Transceiversystem 10 einen Adapter 110 zur Verbindung mit dem Transceiverinterface 12 und zur Bereitstellung der seriellen Verbindung zwischen dem Transceiverinterface 12 und der Datenübertragungseinheit umfasst. Bei dem Adapter 110 handelt es sich um ein Zubehörteil und/oder Nachrüstteil des Transceiversystems 10 für das Transceiverinterface 12. Der Adapter 110 ist mobil, und zwar tragbar. Vorliegend ist der Adapter 110 zu einer Kommunikation mit zumindest dem Transceiverinterface 12 vorgesehen. Der Adapter 110 ist in zumindest den Transceiver-Steckplatz 20, den weiteren Transceiver-Steckplatz 36 oder zumindest den zusätzlich weiteren Transceiver-Steckplatz 78 reversibel einsteckbar. In dieser beispielhaften Ausgestaltung ist der Adapter 110 dazu vorgesehen, von einem SFP-Transceiver-Steckplatz auf einen RJ-45 Anschluss eine serielle Verbindung zur Verfügung zu stellen, welche es ermöglicht Netzwerk-Switche zu konfigurieren. Alternativ kann auch das Transceiverinterface 12 selbst die serielle Schnittstelle, in Form von einem Steckplatz, wie beispielsweise einem RJ-45-Steckplatz, aufweisen. Damit kann auf einen zusätzlichen Adapter 110 verzichtet werden.

### Bezugszeichen

- 10: Transceiversystem
- 12: Transceiverinterface
- 14: Transceiver
- 16: Transceiver
- 18: Gehäuseeinheit
- 20: Transceiver-Steckplatz
- 26: Aufnahmeraum
- 28: Aufnahmeraum
- 30: Einstecköffnung
- 32: Durchführungsöffnung
- 36: Transceiver-Steckplatz
- 38: Winkel
- 50: Steckrichtung
- 52: Steckrichtung
- 56: Sensoreinheit
- 60: Fixiereinheit
- 62: Mobilgerät
- 64: Drahtloskommunikationseinheit
- 66: Magnetelement
- 68: Leitergebundene Kommunikationseinheit
- 70: Außenkontur
- 72: Anzeigeeinheit
- 74: Verbindungseinheit
- 76: Leiterplatte
- 78: Transceiver-Steckplatz
- 80: Außengehäuseelement
- 82: Außengehäuseelement
- 84: Außengehäuse
- 88: Innengehäuse
- 90: Sensoreinheit
- 92: Sensoreinheit
- 96: Durchführungsöffnung
- 98: Durchführungsöffnung
- 100: Speichereinheit
- 102: Energieübertragungseinheit
- 104: Benutzerschnittstelle
- 106: Identifikationseinheit
- 108: Bedieneinheit
- 110: Adapter
- 112: Serielle Schnittstelle

## Patentansprüche

1. Transceiverinterface (12), insbesondere mobiles Transceiverinterface, mit zumindest einem Transceiver-Steckplatz (20), welcher zur Anbindung eines steckbaren Transceivers (14) vorgesehen ist, und mit einer Gehäuseeinheit (18), welche einen Aufnahmeraum (26) zur Aufnahme zumindest eines Großteils des Transceivers (14) in einem eingesteckten Zustand des Transceivers (14) in dem Transceiver-Steckplatz (20) aufweist, **gekennzeichnet durch** eine Verbindungseinheit (74) zur Bereitstellung einer Mobil- und/oder Internetverbindung.

2. Transceiverinterface (12) nach Anspruch 1, **dadurch gekennzeichnet, dass** eine Einstecköffnung (30) des Transceiver-Steckplatzes (20) dem Aufnahmeraum (26) zugewandt ist.

3. Transceiverinterface (12) nach Anspruch 2, **dadurch gekennzeichnet, dass** die Gehäuseeinheit (18) zumindest eine Durchführungsöffnung (32) zur Durchführung des Transceivers (14) zu dem Transceiver-Steckplatz (20) aufweist, welche an einem zu der Einstecköffnung (30) des Transceiver-Steckplatzes (20) gegenüberliegenden Ende der Gehäuseeinheit (18) angeordnet ist.

4. Transceiverinterface (12) nach einem der vorhergehenden Ansprüche, **gekennzeichnet durch** zumindest einen weiteren Transceiver-Steckplatz (36), welcher zur Anbindung eines weiteren Transceivers (16) vorgesehen ist und welcher in einem eingesteckten Zustand des Transceivers (14) in dem Transceiver-Steckplatz (20) zur Anbindung des weiteren Transceivers (16) blockiert ist.

5. Transceiverinterface (12) nach Anspruch 4, **dadurch gekennzeichnet, dass** eine Steckrichtung (50) des Transceiver-Steckplatzes (20) und eine weitere Steckrichtung (52) des weiteren Transceiver-Steckplatzes (36) einen Winkel (38) von zumindest 100° einschließen.

6. Transceiverinterface (12) nach einem der vorhergehenden Ansprüche, **gekennzeichnet durch** zumindest eine Sensoreinheit (56) zur Sensierung zumindest einer Temperaturkenngröße zumindest des Transceivers (14) in einem eingesteckten Zustand.

7. Transceiverinterface (12) nach einem der vorhergehenden Ansprüche, **gekennzeichnet durch** eine Fixiereinheit (60) zur kraft- und/oder formschlüssigen Fixierung eines externen Mobilgeräts (62) an der Gehäuseeinheit (18).

8. Transceiverinterface (12) nach Anspruch 7, **dadurch gekennzeichnet, dass** die Fixiereinheit (60) zumindest ein Magnetelement (66, 66', 66") zur Bereitstellung einer magnetischen Fixierung aufweist.

9. Transceiverinterface (12) nach einem der vorhergehenden Ansprüche, **gekennzeichnet durch** eine Energieübertragungseinheit (102) zur induktiven Bereitstellung von Energie für zumindest ein externes Mobilgerät (62).

10. Transceiverinterface (12) nach einem der vorhergehenden Ansprüche, **dadurch gekennzeichnet, dass** die Gehäuseeinheit (18) zur Aufnahme zumindest eines Großteils eines weiteren Transceivers (16) zumindest einen weiteren Aufnahmeraum (28) aufweist, welcher sich zumindest abschnittsweise mit dem Aufnahmeraum (26) überschneidet.

11. Transceiverinterface (12) nach einem der vorhergehenden Ansprüche, **dadurch gekennzeichnet, dass** die Gehäuseeinheit (18) in einer Draufsicht auf eine Haupterstreckungsebene der Gehäuseeinheit (18) eine zumindest im Wesentlichen zumindest fünfeckige Außenkontur (70) aufweist.

12. Transceiverinterface (12) nach einem der vorhergehenden Ansprüche, **gekennzeichnet durch** eine Anzeigeeinheit (72) zur Anzeige zumindest eines Betriebsstatus und/oder eines Betriebsmodus, welche zumindest abschnittsweise einer Außenkontur (70) der Gehäuseeinheit (18) folgt.

13. Transceiverinterface (12) nach einem der vorhergehenden Ansprüche, **gekennzeichnet durch** zumindest eine Benutzerschnittstelle (104) zur Interaktion mit einem Benutzer.

14. Transceiversystem (10) mit einem Transceiverinterface (12) nach einem der vorhergehenden Ansprüche und mit zumindest dem Transceiver (14).

15. Transceiversystem (10) nach Anspruch 14, **gekennzeichnet durch** zumindest eine serielle Schnittstelle (112) zur Bereitstellung einer seriellen Verbindung zwischen dem Transceiverinterface (12) und einer Datenübertragungseinheit.
